(19) Europäisches Patentamt
European Patent Office
Office européen des brevets

(11) **EP 4 679 344 A1**

(12) **EUROPEAN PATENT APPLICATION**
published in accordance with Art. 153(4) EPC

(43) Date of publication:
**14.01.2026   Bulletin 2026/03**

(21) Application number: **24766400.6**

(22) Date of filing: **04.03.2024**

(51) International Patent Classification (IPC):
**G06Q 10/083** (2024.01)

(52) Cooperative Patent Classification (CPC):
**G06Q 10/0631; G06Q 10/083**

(86) International application number:
**PCT/CN2024/079866**

(87) International publication number:
**WO 2024/183685 (12.09.2024 Gazette 2024/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **07.03.2023   CN 202310246396**

(71) Applicant: **Beijing Jingdong Qianshi Technology
Co., Ltd.
Beijing 100176 (CN)**

(72) Inventor: **WEI, Yu
Beijing 100176 (CN)**

(74) Representative: **Böckmann genannt Dallmeyer,
Georg Nikolas
Haldenstrasse 49b
8142 Uitikon Waldegg (Zürich) (CH)**

(54) **CONTAINER HANDLING METHOD AND APPARATUS**

(57)     Provided are a container transporting method and apparatus. The container transporting method comprises: first, in response to acquiring a plurality of tasks to be transported, grouping the plurality of tasks to be transported based on candidate aisles to obtain grouping results corresponding to the candidate aisles, wherein the grouping results include tasks to be transported corresponding to the candidate aisles and candidate workstations corresponding to the candidate aisles; then performing, based on the grouping results, score calculation on the candidate aisles corresponding to the candidate workstations to obtain candidate aisle scores corresponding to the candidate workstations; then determining, based on the candidate aisle scores corresponding to the candidate workstations, a target workstation and a seed aisle corresponding to the target workstation from the candidate workstations and the candidate aisles corresponding to the candidate workstations; and finally, sending the tasks to be transported corresponding to the target workstation and the seed aisle to a target transport robot, so that the target transport robot performs container transportation according to the tasks to be transported, which reduces the transportation time and improves the transportation efficiency.

_200_

In response to acquiring a plurality of tasks to be transported, grouping the plurality of tasks to be transported based on candidate aisles to obtain grouping results corresponding to the candidate aisles — 210

Performing, based on the grouping results, score calculation on the candidate aisles corresponding to the candidate workstations to obtain candidate aisle scores corresponding to the candidate workstations — 220

Determining, based on the candidate aisle scores corresponding to the candidate workstations, a target workstation and a seed aisle corresponding to the target workstation from the candidate workstations and the candidate aisles corresponding to the candidate workstations — 230

Sending the tasks to be transported corresponding to the target workstation and the seed aisle to a target transport robot, so that the target transport robot performs container transportation according to the tasks to be transported — 240

FIG. 2

**Description**

CROSS-REFERENCE TO RELATED APPLICATIONS

The present disclosure claims priority to Chinese Patent Application No. 202310246396.7, which was filed on March 7, 2023, entitled "CONTAINER TRANSPORTING METHOD AND APPARATUS", and the content of which is hereby incorporated by reference in its entirety.

TECHNICAL FIELD

Embodiments of the present disclosure relate to the fields of computer technology and Internet technology, and, in particular, to a container transporting method and apparatus.

BACKGROUND

With the continuous advancement of technology, more and more transport robots are used to transport items. When transporting the items, after receiving transport tasks, the transport robots locate containers that need to be transported in the transport tasks, first select an idle vehicle, then traverse all the containers to be transported, screen out optimal containers according to condition constraints and distance scores, and repeat the screening cycle multiple times until a maximum number of containers can be transported at a single time.

Such a container determination mode will cause each transport robot to cross multiple different aisles during the container transporting process, resulting in a problem of time-consuming transportation.

SUMMARY

Embodiments of the present disclosure provide a container transporting method and apparatus, an electronic device, and a computer-readable medium.

In a first aspect, embodiments of the present disclosure provide a container transporting method, the method comprising: in response to acquiring a plurality of tasks to be transported, grouping the plurality of tasks to be transported based on candidate aisles to obtain grouping results corresponding to the candidate aisles, wherein the grouping results include tasks to be transported corresponding to the candidate aisles and candidate workstations corresponding to the candidate aisles; performing, based on the grouping results, score calculation on the candidate aisles corresponding to the candidate workstations to obtain candidate aisle scores corresponding to the candidate workstations; determining, based on the candidate aisle scores corresponding to the candidate workstations, a target workstation and a seed aisle corresponding to the target workstation from the candidate workstations and the candidate aisles corresponding to the candidate workstations; and sending the tasks to be transported corresponding to the target workstation and the seed aisle to a target transport robot, so that the target transport robot performs container transportation according to the tasks to be transported.

In some embodiments, performing, based on the grouping results, score calculation on the candidate aisles corresponding to the candidate workstations to obtain candidate aisle scores corresponding to the candidate workstations comprises: acquiring, based on the grouping results, candidate aisles and tasks to be transported corresponding to the candidate workstations; acquiring, based on the tasks to be transported corresponding to the candidate workstations, a corresponding number of containers in the candidate aisles corresponding to the candidate workstations and a number of buffer locations corresponding to the candidate workstations; and performing, based on the number of containers and the number of buffer locations, score calculation on the candidate aisles corresponding to the candidate workstations to obtain candidate aisle scores corresponding to the candidate workstations. In some embodiments, performing, based on the number of containers and the number of buffer locations, score calculation on the candidate aisles corresponding to the candidate workstations to obtain candidate aisle scores corresponding to the candidate workstations comprises: performing, based on the number of containers and the number of buffer locations, container number information calculation on the candidate aisles to obtain container scores corresponding to the candidate aisles; performing, based on the container scores and a transport capacity corresponding to the transport robot, vehicle full load information calculation on the candidate aisles to obtain vehicle full load scores corresponding to the candidate aisles; performing, based on a number of vehicles in the candidate aisles, aisle vehicle number information calculation on the candidate aisles to obtain vehicle scores corresponding to the candidate aisles; performing, based on center positions of the candidate aisles and positions of the candidate workstations, distance information calculation on the candidate aisles to obtain distance scores corresponding to the candidate aisles; and acquiring candidate aisle scores corresponding to the candidate workstations based on the container scores, vehicle full load scores, vehicle scores and distance scores corresponding to the candidate aisles.

In some embodiments, the candidate workstations correspond to a plurality of candidate aisles; and determining, based on the candidate aisle scores corresponding to the candidate workstations, a target workstation and a seed aisle corresponding to the target workstation from the candidate workstations and the candidate aisles corresponding to the candidate workstations comprises: selecting, based on the candidate aisle scores corresponding to the candidate workstations, an optimal aisle corresponding to each candidate workstation from the plurality of candidate aisles corresponding to each candidate workstation; determining, based on the optimal aisle corresponding to each candidate workstation and buffer location idle information corresponding to each candidate workstation, buffer location utilization information corresponding to each candidate workstation; and selecting, based on the buffer location utilization information, a target workstation from a plurality of candidate workstations, and determining the optimal aisle corresponding to the target workstation as a seed aisle corresponding to the target workstation.

In some embodiments, sending the tasks to be transported corresponding to the target workstation and the seed aisle to a target transport robot, so that the target transport robot performs container transportation according to the tasks to be transported, comprises: in response to determining a plurality of candidate transport robots for transporting containers, acquiring current positions of the plurality of candidate transport robots; calculating, based on the current positions of the plurality of candidate transport robots and a center position of the seed aisle, path information corresponding to the plurality of candidate transport robots; selecting, based on the path information corresponding to the plurality of candidate transport robots, a target transport robot from the plurality of candidate transport robots; and sending the tasks to be transported corresponding to the target workstation and the seed aisle to the target transport robot, so that the target transport robot performs container transportation according to the tasks to be transported.

In some embodiments, sending the tasks to be transported corresponding to the target workstation and the seed aisle to the target transport robot, so that the target transport robot performs container transportation according to the tasks to be transported, comprises: screening, based on the tasks to be transported corresponding to the target workstation and a transport capacity corresponding to the target transport robot, a plurality of candidate containers in the seed aisle to obtain a plurality of primary screening containers; performing, based on position information and task information corresponding to the plurality of primary screening containers, score calculation on the plurality of primary screening containers to obtain scores corresponding to the plurality of primary screening containers; selecting, based on the scores corresponding to the plurality of primary screening containers, a first set of containers to be transported corresponding to the seed aisle; and sending the first set of containers to be transported to the target transport robot, so that the target transport robot performs container transportation according to the first set of containers to be transported.

In some embodiments, sending the first set of containers to be transported to the target transport robot, so that the target transport robot performs container transportation according to the first set of containers to be transported, comprises: judging, based on the first set of containers to be transported and the transport capacity of the target transport robot, whether the target transport robot has a remaining transport capacity; in response to determining that the target transport robot has a remaining transport capacity, determining, based on the remaining transport capacity of the target transport robot and the target workstation, an extended aisle corresponding to the target workstation; selecting, based on the tasks to be transported corresponding to the target workstation and the remaining transport capacity of the target transport robot, a second set of containers to be transported corresponding to the extended aisle; and sending the first set of containers to be transported and the second set of containers to be transported to the target transport robot, so that the target transport robot performs container transportation according to the first set of containers to be transported and the second set of containers to be transported.

In some embodiments, in response to determining that the target transport robot has a remaining transport capacity, determining, based on the remaining transport capacity of the target transport robot and the target workstation, an extended aisle corresponding to the target workstation comprises: in response to determining that the target transport robot has a remaining transport capacity, performing, based on the remaining transport capacity of the target transport robot and the target workstation, score calculation on other candidate aisles to obtain other candidate aisle scores corresponding to the target workstation; and determining, based on the other candidate aisle scores corresponding to the target workstation, an extended aisle corresponding to the target workstation.

In some embodiments, in response to determining that the target transport robot has a remaining transport capacity, performing, based on the remaining transport capacity of the target transport robot and the target workstation, score calculation on other candidate aisles to obtain other candidate aisle scores corresponding to the target workstation comprises: acquiring, in response to determining that the target transport robot has a remaining transport capacity, a number of containers corresponding to the other candidate aisles and a number of buffer locations corresponding to the target workstation; performing, based on the number of containers corresponding to the other candidate aisles and the number of buffer locations corresponding to the target workstation, container number information calculation on the other candidate aisles to obtain container scores corresponding to the other candidate aisles; performing, based on the container scores and the remaining transport capacity of the target transport robot, vehicle full load information calculation on the other candidate aisles to obtain vehicle full load scores corresponding to the other candidate aisles; performing, based on a number of vehicles in the other candidate aisles, aisle vehicle number information calculation on the other candidate aisles to obtain vehicle scores corresponding to the other candidate aisles; performing, based on center positions of the other candidate aisles, a position of the target workstation, a position of the target transport robot and a center position of the seed aisle, distance information calculation on the other candidate aisles to obtain distance scores corresponding to the other candidate aisles; calculating, based on the seed aisle corresponding to the target workstation, channel scores corresponding to the other candidate aisles; and acquiring other candidate aisle scores corresponding to the target workstation based on the container scores, vehicle full load scores, vehicle scores, distance scores and channel scores corresponding to the other candidate aisles.

In some embodiments, in response to determining that the target transport robot has a remaining transport capacity, determining, based on the remaining transport capacity of the target transport robot and the target workstation, an extended aisle corresponding to the target workstation comprises: acquiring, in response to determining that the target transport robot has a remaining transport capacity, a number of target aisles corresponding to the target transport robot; judging whether the number of target aisles corresponding to the target transport robot exceeds a preset threshold; and in response to determining that the number of target aisles corresponding to the target transport robot does not exceed the preset threshold, determining, based on the remaining transport capacity of the target transport robot and the target workstation, an extended aisle corresponding to the target workstation.

In some embodiments, sending the first set of containers to be transported and the second set of containers to be transported to the target transport robot, so that the target transport robot performs container transportation according to the first set of containers to be transported and the second set of containers to be transported, comprises: in response to determining that the number of target aisles corresponding to the target transport robot exceeds the preset threshold, sending the first set of containers to be transported and the second set of containers to be transported to the target transport robot, so that the target transport robot performs container transportation according to the first set of containers to be transported and the second set of containers to be transported.

In a second aspect, embodiments of the present disclosure provide a container transporting apparatus, the apparatus comprising: a grouping module configured to group, in response to acquiring a plurality of tasks to be transported, the plurality of tasks to be transported based on candidate aisles to obtain grouping results corresponding to the candidate aisles, wherein the grouping results include tasks to be transported corresponding to the candidate aisles and candidate workstations corresponding to the candidate aisles; a calculation module configured to perform, based on the grouping results, score calculation on the candidate aisles corresponding to the candidate workstations to obtain candidate aisle scores corresponding to the candidate workstations; a determination module configured to determine, based on the candidate aisle scores corresponding to the candidate workstations, a target workstation and a seed aisle corresponding to the target workstation from the candidate workstations and the candidate aisles corresponding to the candidate workstations; and a sending module configured to send the tasks to be transported corresponding to the target workstation and the seed aisle to a target transport robot, so that the target transport robot performs container transportation according to the tasks to be transported.

In some embodiments, the calculation module is further configured to: acquire, based on the grouping results, candidate aisles and tasks to be transported corresponding to the candidate workstations; acquire, based on the tasks to be transported corresponding to the candidate workstations, a corresponding number of containers in the candidate aisles corresponding to the candidate workstations and a number of buffer locations corresponding to the candidate workstations; and perform, based on the number of containers and the number of buffer locations, score calculation on the candidate aisles corresponding to the candidate workstations to obtain candidate aisle scores corresponding to the candidate workstations.

In some embodiments, the calculation module is further configured to: perform, based on the number of containers and the number of buffer locations, container number information calculation on the candidate aisles to obtain container scores corresponding to the candidate aisles; perform, based on the container scores and a transport capacity corresponding to the transport robot, vehicle full load information calculation on the candidate aisles to obtain vehicle full load scores corresponding to the candidate aisles; perform, based on a number of vehicles in the candidate aisles, aisle vehicle number information calculation on the candidate aisles to obtain vehicle scores corresponding to the candidate aisles; perform, based on center positions of the candidate aisles and positions of the candidate workstations, distance information calculation on the candidate aisles to obtain distance scores corresponding to the candidate aisles; and acquire candidate aisle scores corresponding to the candidate workstations based on the container scores, vehicle full load scores, vehicle scores and distance scores corresponding to the candidate aisles.

In some embodiments, the candidate workstations correspond to a plurality of candidate aisles; and the determination module is further configured to: select, based on the candidate aisle scores corresponding to the candidate workstations, an optimal aisle corresponding to each candidate workstation from the plurality of candidate aisles corresponding to each candidate workstation; determine, based on the optimal aisle corresponding to each candidate workstation and buffer location idle information corresponding to each candidate workstation, buffer location utilization information corresponding to each candidate workstation; and select, based on the buffer location utilization information, a target workstation from a plurality of candidate workstations, and determine the optimal aisle corresponding to the target workstation as a seed aisle corresponding to the target workstation. In some embodiments, the sending module is further configured to: in response to determining a plurality of candidate transport robots for transporting containers, acquire current positions of the plurality of candidate transport robots; calculate, based on the current positions of the plurality of candidate transport robots and a center position of the seed aisle, path information corresponding to the plurality of candidate transport robots; select, based on the path information corresponding to the plurality of candidate transport robots, a target transport robot from the plurality of candidate transport robots; and send the tasks to be transported corresponding to the target workstation and the seed aisle to the target transport robot, so that the target transport robot performs container transportation according to the tasks to be transported.

In some embodiments, the sending module is further configured to: screen, based on the tasks to be transported corresponding to the target workstation and a transport capacity corresponding to the target transport robot, a plurality of candidate containers in the seed aisle to obtain a plurality of primary screening containers; perform, based on position information and task information corresponding to the plurality of primary screening containers, score calculation on the plurality of primary screening containers to obtain scores corresponding to the plurality of primary screening containers; select, based on the scores corresponding to the plurality of primary screening containers, a first set of containers to be transported corresponding to the seed aisle; and send the first set of containers to be transported to the target transport robot, so that the target transport robot performs container transportation according to the first set of containers to be transported.

In some embodiments, the sending module is further configured to: judge, based on the first set of containers to be transported and the transport capacity of the target transport robot, whether the target transport robot has a remaining transport capacity; in response to determining that the target transport robot has a remaining transport capacity, determine, based on the remaining transport capacity of the target transport robot and the target workstation, an extended aisle corresponding to the target workstation; select, based on the tasks to be transported corresponding to the target workstation and the remaining transport capacity of the target transport robot, a second set of containers to be transported corresponding to the extended aisle; and send the first set of containers to be transported and the second set of containers to be transported to the target transport robot, so that the target transport robot performs container transportation according to the first set of containers to be transported and the second set of containers to be transported.

In some embodiments, the sending module is further configured to: in response to determining that the target transport robot has a remaining transport capacity, perform, based on the remaining transport capacity of the target transport robot and the target workstation, score calculation on other candidate aisles to obtain other candidate aisle scores corresponding to the target workstation; and determine, based on the other candidate aisle scores corresponding to the target workstation, an extended aisle corresponding to the target workstation.

In some embodiments, the sending module is further configured to: acquire, in response to determining that the target transport robot has a remaining transport capacity, a number of containers corresponding to the other candidate aisles and a number of buffer locations corresponding to the target workstation; perform, based on the number of containers corresponding to the other candidate aisles and the number of buffer locations corresponding to the target workstation, container number information calculation on the other candidate aisles to obtain container scores corresponding to the other candidate aisles; perform, based on the container scores and the remaining transport capacity of the target transport robot, vehicle full load information calculation on the other candidate aisles to obtain vehicle full load scores corresponding to the other candidate aisles; perform, based on a number of vehicles in the other candidate aisles, aisle vehicle number information calculation on the other candidate aisles to obtain vehicle scores corresponding to the other candidate aisles; perform, based on center positions of the other candidate aisles, a position of the target workstation, a position of the target transport robot and a center position of the seed aisle, distance information calculation on the other candidate aisles to obtain distance scores corresponding to the other candidate aisles; calculate, based on the seed aisle corresponding to the target workstation, channel scores corresponding to the other candidate aisles; and acquire other candidate aisle scores corresponding to the target workstation based on the container scores, vehicle full load scores, vehicle scores, distance scores and channel scores corresponding to the other candidate aisles.

In some embodiments, the sending module is further configured to: acquire, in response to determining that the target transport robot has a remaining transport capacity, a number of target aisles corresponding to the target transport robot; judge whether the number of target aisles corresponding to the target transport robot exceeds a preset threshold; and in response to determining that the number of target aisles corresponding to the target transport robot does not exceed the preset threshold, determine, based on the remaining transport capacity of the target transport robot and the target workstation, an extended aisle corresponding to the target workstation.

In some embodiments, the sending module is further configured to: in response to determining that the number of target aisles corresponding to the target transport robot exceeds the preset threshold, send the first set of containers to be transported and the second set of containers to be transported to the target transport robot, so that the target transport robot performs container transportation according to the first set of containers to be transported and the second set of containers to be transported.

In a third aspect, an embodiment of the present disclosure provides an electronic device, the electronic device comprising: one or more processors; and a storage device for storing one or more programs that, when executed by the one or more processors, cause the one or more processors to implement the container transporting method as described in any embodiment of the first aspect.

In a fourth aspect, an embodiment of the present disclosure provides a computer-readable medium having a computer program stored thereon that, when executed by a processor, implements the container transporting method as described in any embodiment of the first aspect.

BRIEF DESCRIPTION OF DRAWINGS

Other features, objects and advantages of the present disclosure will become more apparent by reading the detailed description of non-limiting embodiments as made with reference to the following figures:

Fig. 1 is an exemplary system architecture diagram in which an embodiment of the present disclosure can be applied;
Fig. 2 is a flowchart of an embodiment of a container transporting method according to the present disclosure;
Fig. 3 is a schematic diagram of an application scene of a container transporting method according to an embodiment of the present disclosure;
Fig. 4 is a flowchart of an embodiment of performing score calculation on candidate aisles corresponding to candidate workstations according to the present disclosure;
Fig. 5 is a flowchart of an embodiment of sending tasks to be transported corresponding to a target workstation and a seed aisle to a target transport robot according to the present disclosure;
Fig. 6 is a flowchart of an embodiment of sending a first set of containers to be transported to the target transport robot according to the present disclosure;
Fig. 7 is a flowchart of an embodiment of determining an extended aisle corresponding to the target workstation according to the present disclosure;
Fig. 8 is a structural schematic diagram of an embodiment of a container transporting apparatus according to the present disclosure;
Fig. 9 is a structural schematic diagram of an electronic device suitable for implementing embodiments of the present disclosure.

DETAILED DESCRIPTION

Hereinafter, the present disclosure is further described in detail in conjunction with the figures and embodiments. It should be understood that the specific embodiments described herein are only used to explain the relevant disclosure rather than to limit the disclosure. In addition, it should be noted that, for the convenience of description, only parts related to the relevant disclosure are shown in the figures.

It should be noted that, in the absence of conflict, the embodiments in the present disclosure and the features in the embodiments may be combined with each other. The present disclosure will be described in detail below with reference to the figures and in conjunction with the embodiments.

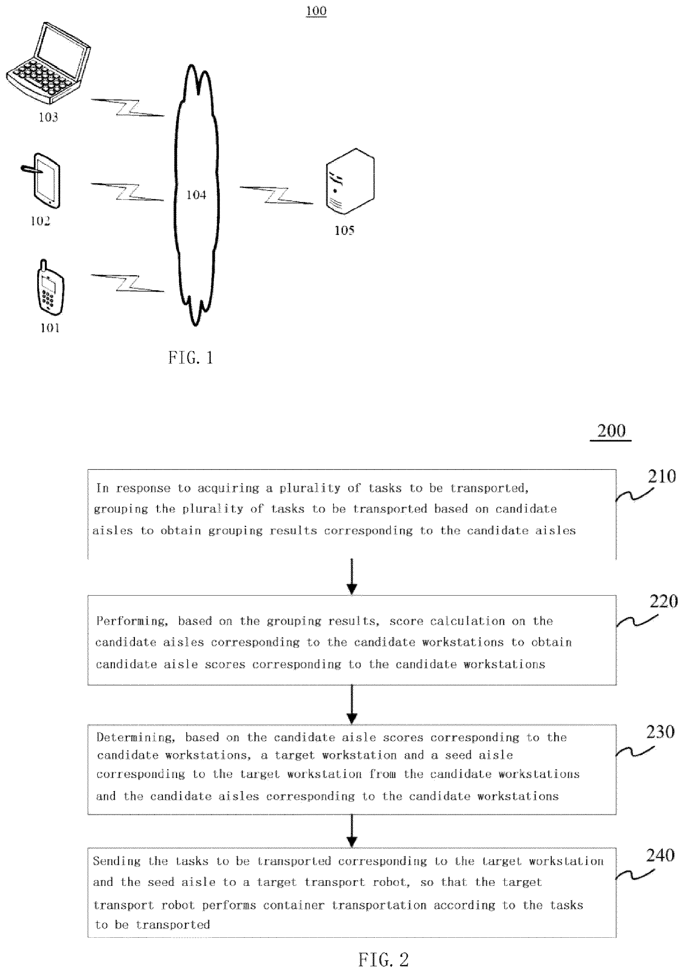

Fig. 1 shows an exemplary system architecture 100, in which a container transporting method and a container transporting apparatus according to embodiments of the present disclosure can be applied. As shown in Fig. 1, the system architecture 100 may comprise terminal devices 101, 102, 103, a network 104 and a server 105. The network 104 is used to provide a medium for communication links between the terminal devices 101, 102, 103 and the server 105. The network 104 may include various connection types, such as wired and wireless communication links, fiber optic cables, or the like.

The user can use the terminal devices 101, 102, 103 to interact with the server 105 via the network 104 to receive or send messages, etc. The terminal devices 101, 102, 103 may be user terminal devices, on which various client applications can be installed, for example, e-commerce platform applications, image applications, video applications, search applications, financial applications, etc. The terminal devices 101, 102, 103 may be various electronic devices that have a display screen and support receiving server messages, including but not limited to smart phones, tablet computers, e-book readers, electronic players, laptop computers, desktop computers, and the like.

The terminal devices 101, 102, 103 may be hardware or software. When the terminal devices 101, 102, 103 are hardware, they may be various electronic devices; when the terminal devices 101, 102, 103 are software, they can be installed in the electronic devices listed above. They can be implemented as multiple software or software modules (for example, multiple software modules for providing distributed services), or as a single software or software module. No specific limitations are given here.

The server 105 may be a server that provides various services, such as a backend server that receives a request sent by a terminal device that establishes a communication connection therewith. The backend server can perform processing, e.g., reception and analysis, on the request sent by the terminal device, and generate processing results.

The server 105 can acquire a plurality of tasks to be transported and group the plurality of tasks to be transported based on candidate aisles to obtain grouping results corresponding to the candidate aisles, wherein the grouping results include tasks to be transported corresponding to the candidate aisles and candidate workstations corresponding to the candidate aisles, then perform, based on the grouping results, score calculation on the candidate aisles corresponding to the candidate workstations to obtain candidate aisle scores corresponding to the candidate workstations, then determine, based on the candidate aisle scores corresponding to the candidate workstations, a target workstation and a seed aisle corresponding to the target workstation from the candidate workstations and the candidate aisles corresponding to the candidate workstations, and finally, send the tasks to be transported corresponding to the target workstation and the seed aisle to a target transport robot, so that the target transport robot performs container transportation according to the tasks to be transported.

It should be noted that the server may be hardware or software. When the server is hardware, it may be various electronic devices that provide various services for the terminal devices. When the server is software, it can be implemented as multiple software or software modules that provide various services for the terminal devices, or as a single software or software module that provides various services for the terminal devices. No specific limitations are made here.

It should be noted that the container transporting method provided in the embodiments of the present disclosure can be executed by the server 105, and accordingly, the container transporting apparatus can be disposed in the server 105.

It should be understood that the numbers of terminal devices, networks and servers in Fig. 1 are merely illustrative. According to implementation requirements, there may be any numbers of terminal devices, networks and servers.

Refer to Fig. 2, which shows a flowchart 200 of an embodiment of a container transporting method according to the present disclosure. The container transporting method comprises the following steps: Step 210: in response to acquiring a plurality of tasks to be transported, grouping the plurality of tasks to be transported based on candidate aisles to obtain grouping results corresponding to the candidate aisles.

In the present step, an execution subject on which the container transporting method runs (e.g., the server 105 in Fig. 1) can receive a plurality of different tasks to be transported, which can characterize transporting the containers to be transported from storage locations in the aisles to the workstations. For example, the tasks to be transported may include transporting a container A from a storage location xx in a aisle No. 1 to a workstation a, transporting a container B from the storage location xx in the aisle No. 1 to the workstation a, transporting a container C from a storage location xx in a aisle No. 2 to a workstation b, and so on. The above execution subject can also perform data initialization for the tasks to be transported, and initialize the following data: a set C of all containers to be transported; a set W of target workstations corresponding to the containers; a maximum number Ø of containers that the transport robot can transport at one time; a target transport robot $\alpha$ selected for this result; a seed aisle $\beta$ for transportation by the transport robot; a target workstation $\pi$ for transportation by the transport robot; a set °F of aisles for transportation by the transport robot; and a set °C of containers transported by the transport robot.

After acquiring a plurality of tasks to be transported, the above execution subject can perform data analysis on each task to be transported to determine a aisle corresponding to each task to be transported, i.e., judging from which candidate aisle the container transportation is carried out for each task to be transported, and then use candidate aisles to group the plurality of tasks to be transported to obtain grouping results corresponding to the candidate aisles. The grouping results may include tasks to be transported corresponding to the candidate aisles and candidate workstations corresponding to the candidate aisles, so a presentation format of the grouping results may be: {candidate aisle number: {task number, container number, workstation number}}.

As an example, the tasks to be transported include task 1: transporting a container A from a storage location xx in a aisle No. 1 to a workstation a, task 2: transporting a container B from the storage location xx in the aisle No. 1 to the workstation a, and task 3: transporting a container C from a storage location xx in a aisle No. 2 to a workstation b. By grouping according to the candidate aisles, the following grouping results can be obtained: {No. 1: {task 1, container A, workstation a}}, {No. 1: {task 2, container B, workstation a}}, and {No. 2: {task 3, container C, workstation b}}.

Step 220: performing, based on the grouping results, score calculation on the candidate aisles corresponding to the candidate workstations to obtain candidate aisle scores corresponding to the candidate workstations.

In the present step, after obtaining the grouping results, the above execution subject can perform data statistics on the grouping results to acquire candidate aisles corresponding to each candidate workstation, that is, there may be a situation where one candidate workstation corresponds to a plurality of candidate aisles, and a situation where one candidate workstation corresponds to one candidate aisle.

After obtaining the candidate aisles corresponding to each candidate workstation, the above execution subject can acquire aisle information of the candidate aisles corresponding to each candidate workstation. The aisle information characterizes aisle attribute information of the candidate aisles, and may include attribute information characterizing the correlation between the candidate aisles and the candidate workstation, such as a number of containers in the candidate aisles belonging to the candidate workstation, and the like. The above execution subject can perform score calculation using the aisle information corresponding to the candidate aisles to obtain a score corresponding to each candidate aisle, so that candidate aisle scores corresponding to each candidate workstation can be obtained, and each candidate workstation can correspond to multiple candidate aisle scores.

As an example, the grouping results may include: {No. 1: {task 1, container A, workstation a}}, {No. 1: {task 2, container B, workstation a}}, and {No. 2: {task 3, container C, workstation b}}. Data statistics are performed on the grouping results to obtain candidate aisles corresponding to each candidate workstation, that is, the candidate aisles corresponding to the workstation a include a aisle No. 1 and a aisle No. 2, and the candidate aisles corresponding to the workstation b include a aisle No. 2. The above execution subject can perform score calculation on the aisle No. 1 and the aisle No. 2 corresponding to the workstation a, respectively, to obtain the score of the candidate aisle No. 1 and the score of the candidate aisle No. 2 corresponding to the workstation a; and the above execution entity can perform score calculation on the aisle No. 2 corresponding to the workstation b to obtain the score of the candidate aisle No. 2 corresponding to the workstation b.

Step 230: determining, based on the candidate aisle scores corresponding to the candidate workstations, a target workstation and a seed aisle corresponding to the target workstation from the candidate workstations and the candidate aisles corresponding to the candidate workstations.

In the present step, after acquiring the candidate aisle scores corresponding to each candidate workstation, the above execution subject can compare the candidate aisle scores corresponding to each candidate workstation, select a candidate workstation with the highest score from the candidate aisle scores corresponding to all candidate workstations, determine the candidate workstation as a target workstation, and determine the candidate aisle corresponding to the highest candidate aisle score as a seed aisle corresponding to the target workstation.

As an optional implementation, each candidate workstation can correspond to a plurality of candidate aisles. The above step 230, i.e., determining, based on the candidate aisle scores corresponding to the candidate workstations, a target workstation and a seed aisle corresponding to the target workstation from the candidate workstations and the candidate aisles corresponding to the candidate workstations, may comprise the following steps:

A first step: selecting, based on the candidate aisle scores corresponding to the candidate workstations, an optimal aisle corresponding to each candidate workstation from the plurality of candidate aisles corresponding to each candidate workstation.

Specifically, after acquiring the candidate aisle scores corresponding to each candidate workstation, the above execution subject can respectively compare the candidate aisle scores corresponding to each candidate workstation, select the highest candidate aisle score corresponding to each candidate workstation, and determine the candidate aisle corresponding to the highest candidate aisle score as an optimal aisle, so that the optimal aisle corresponding to each candidate workstation can be acquired.

As an example, the above execution subject determines, based on the candidate aisle scores, an optimal aisle corresponding to each candidate workstation, which can be expressed as: {workstation a-aisle 02-aisle score xxx}, {workstation b-aisle 01-aisle score xxx}, or the like.

A second step: determining, based on the optimal aisle corresponding to each candidate workstation and buffer location idle information corresponding to each candidate workstation, buffer location utilization information corresponding to each candidate workstation.

Specifically, after acquiring the optimal aisle corresponding to each candidate workstation, the above execution subject can acquire buffer location idle information corresponding to each candidate workstation respectively, and the buffer location idle information can characterize a number of idle buffer locations of the candidate workstation. The above execution subject can calculate a ratio between the number of idle buffer locations of the candidate workstation and a total number of buffer locations, and determine a buffer location idle rate corresponding to the candidate workstation, that is, the buffer location idle rate can be calculated by the following formula:

$$h_i = \text{a number of idle buffer locations/a total number of buffer locations}$$

where $h_i$ is a buffer location idle rate of the candidate workstation i.

Then, the above execution subject can further determine a candidate aisle score corresponding to the optimal aisle according to the optimal aisle corresponding to each candidate workstation, and calculate buffer location utilization information corresponding to each candidate workstation using the candidate aisle score corresponding to the optimal aisle and the buffer location idle rate. The above execution subject can calculate the buffer location utilization information corresponding to each candidate workstation by the following formula:

$$cost\prime_{ij} = cost_{ij} + \beta_4 * h_i$$

where $cost\prime_{ij}$ is buffer location utilization information of the candidate workstation i for the optimal aisle j, $cost_{ij}$ is a candidate

aisle score of the candidate workstation i for the optimal aisle j, $h_i$ is a buffer location idle rate of the candidate workstation i, and $\beta_4$ is a weight value preset by the staff based on experience.

A third step: selecting, based on the buffer location utilization information, a target workstation from a plurality of candidate workstations, and determining the optimal aisle corresponding to the target workstation as a seed aisle corresponding to the target workstation.

Specifically, after acquiring the buffer location utilization information corresponding to each candidate workstation, the above execution subject can compare the buffer location utilization information corresponding to each candidate workstation, select a corresponding candidate workstation with the largest buffer location utilization information from the plurality of candidate workstations, determine it as a target workstation, and determine the optimal aisle corresponding to the target workstation as a seed aisle corresponding to the target workstation.

Furthermore, the above execution subject can add the seed aisle corresponding to the target workstation to the set °F of aisles for transportation by the transport robot.

In the present implementation, secondary screening is performed based on the buffer location utilization rate of the candidate workstations to screen out relatively idle candidate workstations, balance the workload of the workstations, reduce personnel waiting, and maintain a balanced workload of manual picking at the workstations.

Step 240: sending the tasks to be transported corresponding to the target workstation and the seed aisle to a target transport robot, so that the target transport robot performs container transportation according to the tasks to be transported.

In the present step, after determining the target workstation and the seed aisle, the above execution subject can determine tasks to be transported corresponding to the target workstation and the seed aisle from a plurality of tasks to be transported according to the target workstation and the seed aisle, and send the tasks to be transported corresponding to the target workstation and the seed aisle to a target transport robot. After receiving the tasks to be transported corresponding to the target workstation and the seed aisle, the target transport robot can perform container transportation from the seed aisle according to the tasks to be transported, to transport the containers in the seed aisle to the target workstation.

In the container transporting method provided by the embodiments of the present disclosure, the above execution subject first groups, in response to acquiring a plurality of tasks to be transported, the plurality of tasks to be transported based on candidate aisles to obtain grouping results corresponding to the candidate aisles, wherein the grouping results include tasks to be transported corresponding to the candidate aisles and candidate workstations corresponding to the candidate aisles, then performs, based on the grouping results, score calculation on the candidate aisles corresponding to the candidate workstations to obtain candidate aisle scores corresponding to the candidate workstations, then determines, based on the candidate aisle scores corresponding to the candidate workstations, a target workstation and a seed aisle corresponding to the target workstation from the candidate workstations and the candidate aisles corresponding to the candidate workstations, and finally, sends the tasks to be transported corresponding to the target workstation and the seed aisle to a target transport robot, so that the target transport robot performs container transportation according to the tasks to be transported. In the process of using the transport robot to transport containers in a aisle, the above execution subject can group the tasks to be transported based on the aisle as a dimension, determine a seed aisle corresponding to the target workstation and then use the target transport robot to transport the tasks to be transported corresponding to the target workstation and the seed aisle, can enable the target transport robot to complete container transportation in the seed aisle and reduce the number of cross-aisles, and can effectively prevent the target transport robot from constantly changing aisles in the transportation process, so that the transport robot can quickly pick up goods in a single aisle, thereby improving the overall transportation efficiency in the container transporting process, reducing the transportation time and improving the transportation efficiency.

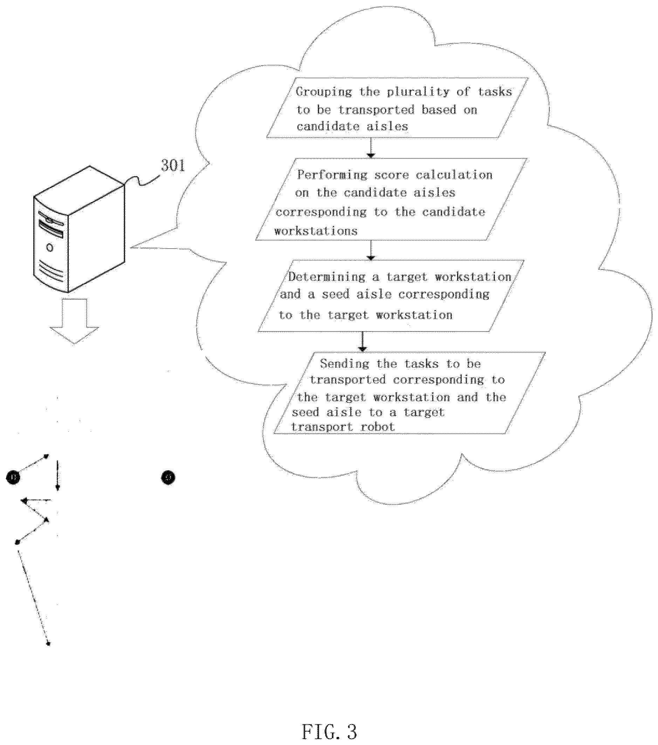

With continuous reference to Fig. 3, it is a schematic diagram of an application scene of a container transporting method according to the present embodiment. In the application scene of Fig. 3, the server 301 can acquire a plurality of tasks to be transported: task 1: transporting a container A from a storage location xx in a aisle No. 1 to a workstation a; task 2: transporting a container B from the storage location xx in the aisle No. 1 to the workstation a; and task 3: transporting a container C from a storage location xx in a aisle No. 2 to a workstation b. Then, the server 301 groups the plurality of tasks to be transported according to the candidate aisles, and the following grouping results can be obtained: {No. 1: {task 1, container A, workstation a}}, {No. 1: {task 2, container B, workstation a}}, and {No. 2: {task 3, container C, workstation b}}. The server 301 can perform data statistics on the grouping results to obtain candidate aisles corresponding to each candidate workstation, that is, the candidate aisles corresponding to the workstation a include a aisle No. 1 and a aisle No. 2, and the candidate aisles corresponding to the workstation b include a aisle No. 2. The server 301 can perform score calculation on the aisle No. 1 and the aisle No. 2 corresponding to the workstation a, respectively, to obtain the score of the candidate aisle No. 1 and the score of the candidate aisle No. 2 corresponding to workstation a; and the server 301 can perform score calculation on the aisle No. 2 corresponding to the workstation b to obtain the score of the candidate aisle No. 2 corresponding to the workstation b. The server 301 can compare the candidate aisle score No. 1 and the candidate aisle score No. 2 corresponding to workstation a and the candidate aisle score No. 2 corresponding to the workstation b, select the candidate aisle with the highest candidate aisle score as a seed aisle, and determine the candidate workstation corresponding to the candidate aisle score as a target workstation. Afterwards, the server 301 sends the tasks to be transported corresponding to the target workstation and the seed aisle to a target transport robot, so that the target transport robot performs container transportation according to the tasks to be transported. That is, the server 301 can determine a set of containers to be transported in the seed aisle according to the tasks to be transported, and can use a TSP algorithm to find an optimal sequence, with the current position of the target transport robot as a starting point, the target workstation as a destination point, and all the picking points of the containers to be transported in the set of containers to be transported as necessary points, to generate transport tasks. The transport tasks can be expressed as: {picking point, container number, container coordinates, sequence}, {picking point, container number, container coordinates, sequence}, etc., so that the target transport robot can transport the containers to be transported in the seed aisle to the target workstation.

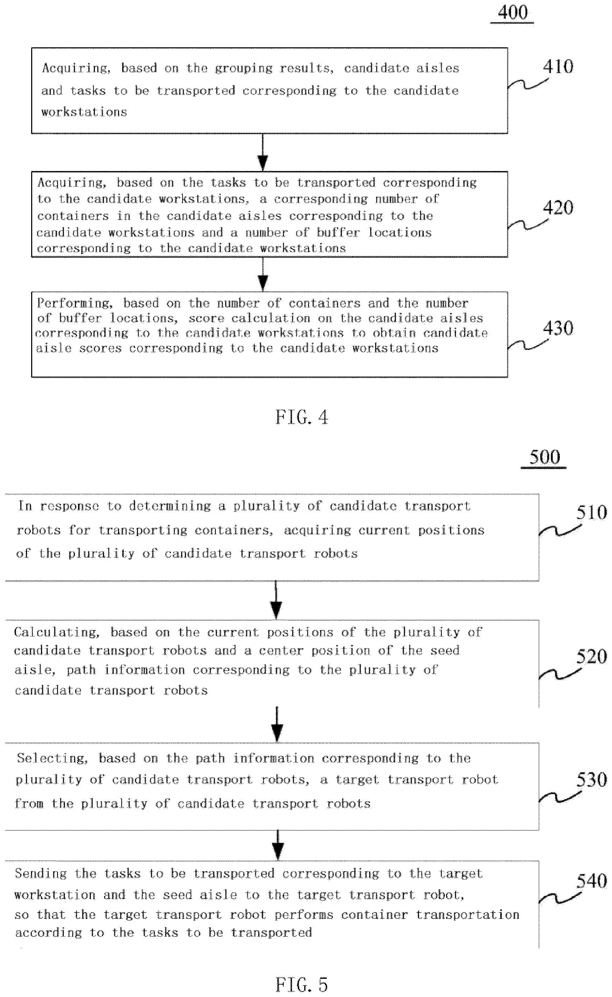

Refer to Fig. 4, which shows a flowchart 400 of an embodiment of performing score calculation on candidate aisles corresponding to candidate workstations. That is, the above step 220, i.e., performing, based on the grouping results, score calculation on the candidate aisles corresponding to the candidate workstations to obtain candidate aisle scores corresponding to the candidate workstations, may comprise the following steps:

Step 410: acquiring, based on the grouping results, candidate aisles and tasks to be transported corresponding to the candidate workstations.

In the present step, after acquiring the grouping results, the above execution subject can perform data statistics on the grouping results to acquire candidate aisles corresponding to each candidate workstation, that is, there may be a situation where one candidate workstation corresponds to a plurality of candidate aisles, and a situation where one candidate workstation corresponds to one candidate aisle. Then, the above execution subject can also acquire tasks to be transported corresponding to each candidate workstation from the grouping results.

Step 420: acquiring, based on the tasks to be transported corresponding to the candidate workstations, a corresponding number of containers in the candidate aisles corresponding to the candidate workstations and a number of buffer locations corresponding to the candidate workstations. In the present step, the above execution subject can perform, based on the tasks to be transported corresponding to the candidate workstations, container number statistics on each candidate aisle for each candidate workstation, and screen out a number of containers in the candidate aisles belonging to the candidate workstation. In addition, the above execution subject can acquire a number of buffer locations corresponding to each candidate workstation, so that the above execution subject acquires a number of containers in each candidate aisle corresponding to each candidate workstation and a number of buffer locations corresponding to each candidate workstation.

Step 430: performing, based on the number of containers and the number of buffer locations, score calculation on the candidate aisles corresponding to the candidate workstations to obtain candidate aisle scores corresponding to the candidate workstations.

In the present step, after acquiring the corresponding number of containers in the candidate aisles corresponding to the candidate workstations and the number of buffer locations corresponding to the candidate workstations, the above execution subject can calculate, according to the number of containers in each candidate aisle and the number of buffer locations in the candidate workstation, the correlation between the candidate aisle and the candidate workstation to obtain a score of each candidate aisle so as to obtain a candidate aisle score corresponding to the candidate workstation. As an optional implementation, the above step 430, i.e., performing, based on the number of containers and the number of buffer locations, score calculation on the candidate aisles corresponding to the candidate workstations to obtain candidate aisle scores corresponding to the candidate workstations, may comprise the following steps:

A first step: performing, based on the number of containers and the number of buffer locations, container number information calculation on the candidate aisles to obtain container scores corresponding to the candidate aisles.

Specifically, after acquiring, for each candidate workstation, the number of containers corresponding to each candidate aisle and the number of buffer locations corresponding to the candidate workstation, the above execution subject can perform, based on the number of containers and the number of buffer locations, container number information calculation on the candidate aisle to obtain a container score corresponding to the candidate aisle.

The above execution subject can calculate a container score corresponding to the candidate aisle by the following formula:

$$D_j = \beta_1 {}^* d_j$$

$$d_j = min(m, n)$$

where $D_j$ is a container score corresponding to candidate lane j, $d_j$, which is a number of containers that can be transported in the candidate aisle, is limited by the number of buffer locations of the candidate workstation and takes a minimum value of the number m of containers and the number n of buffer locations, and $\beta_1$ is a weight value preset by the staff based on experience. The larger $D_j$ is, the more containers to be transported are in the candidate aisle.

A second step: performing, based on the container scores and a transport capacity corresponding to the transport robot, vehicle full load information calculation on the candidate aisles to obtain vehicle full load scores corresponding to the candidate aisles.

Specifically, after acquiring the container scores of the candidate aisles, the above execution subject can perform, based on a number of containers that can be transported in the candidate aisles and a transport capacity corresponding to the transport robot, vehicle full load information calculation on the candidate aisles to obtain vehicle full load scores corresponding to the candidate aisles.

The above execution subject can calculate a vehicle full load score corresponding to the candidate aisle by the following formula:

$$E_j = \beta_2 {}^* e_j$$

$$\text{If } d_j \geq \varnothing, \, e_j = 1; \text{ if } d_j < \varnothing, \, e_j = 0;$$

where $E_j$ is a vehicle full load score of the candidate aisle j, $d_j$ is a number of containers that can be transported in the candidate aisle, ø is a maximum number of containers that the transport robot can transport at one time, i.e., a transport capacity corresponding to the transport robot, $e_j$ indicates whether the transport robot can be fully loaded if this candidate aisle is selected, and $\beta_2$ is a weight value preset by the staff based on experience.

A third step: performing, based on a number of vehicles in the candidate aisles, aisle vehicle number information calculation on the candidate aisles to obtain vehicle scores corresponding to the candidate aisles.

Specifically, the above execution subject can acquire a number of vehicles in the candidate aisles, and determine a number of transport robots that already exist in the candidate aisles. The above execution subject can perform, based on the number of vehicles in the candidate aisles, aisle vehicle number information calculation on the candidate aisles to obtain vehicle scores corresponding to the candidate aisles.

The above execution subject can calculate a vehicle score corresponding to the candidate aisle by the following formula:

$$F_j = \beta_3 {}^* f_j$$

where $F_j$ is a vehicle score of the candidate aisle j, $f_j$ is a number of vehicles in the candidate aisle, and $\beta_3$ is a weight value preset by the staff based on experience. The larger $F_j$ is, the more congested the candidate aisle is, so it is necessary to find an idle candidate aisle as much as possible. A fourth step: performing, based on center positions of the candidate aisles and positions of the candidate workstations, distance information calculation on the candidate aisles to obtain distance scores corresponding to the candidate aisles.

Specifically, the above execution subject can determine center positions of the candidate aisles, further determine positions of the candidate workstations, and then perform, based on the center positions of the candidate aisles and the positions of the candidate workstations, distance information calculation on the candidate aisles to obtain distance scores corresponding to the candidate aisles. The above execution subject can calculate a distance score corresponding to the candidate aisle by the following formula:

$$G_j = \beta_4 {}^* g_j$$

where $G_j$ is a distance score of the candidate aisle j, $g_j$ is a distance between the center position of the candidate aisle and the position of the candidate workstation, and $\beta_4$ is a weight value preset by the staff based on experience. The larger $G_j$ is, the farther the candidate aisle is from the candidate workstation.

A fifth step: acquiring candidate aisle scores corresponding to the candidate workstations based on the container scores, vehicle full load scores, vehicle scores and distance scores corresponding to the candidate aisles.

Specifically, after acquiring the container scores, vehicle full load scores, vehicle scores and distance scores of the candidate aisles corresponding to the candidate workstations, the above execution subject can calculate candidate aisle scores corresponding to the candidate workstations based on the container scores, vehicle full load scores, vehicle scores and distance scores.

The above execution subject can calculate a candidate aisle score corresponding to the candidate workstation by the following formula:

$$cost_{ij}=D_j+E_j-F_j-G_j$$

where *cost*$_{ij}$ is a candidate aisle score of the candidate workstation i for the optimal aisle j.

In the present implementation, by performing score calculation on the candidate aisles from multiple different dimensions such as the number of containers, the vehicle full load information, the aisle vehicle number information and the distance information, respectively, the candidate aisle scores are enabled to display the candidate aisles from different dimensions, thereby making the candidate aisle scores more accurate.

In the present embodiment, by performing, based on the number of containers and the number of buffer locations, score calculation on the candidate aisles corresponding to the candidate workstations to obtain candidate aisle scores corresponding to the candidate workstations, the candidate aisle scores can be calculated according to the number of containers in the candidate aisles and the number of buffer locations in the candidate workstations, thereby improving the accuracy of the candidate aisle scores.

Refer to Fig. 5, which shows a flowchart 500 of an embodiment of sending tasks to be transported corresponding to a target workstation and a seed aisle to a target transport robot. That is, the above step 240, i.e., sending the tasks to be transported corresponding to the target workstation and the seed aisle to a target transport robot, so that the target transport robot performs container transportation according to the tasks to be transported, may comprise the following steps:

Step 510: in response to determining a plurality of candidate transport robots for transporting containers, acquiring current positions of the plurality of candidate transport robots.

In the present step, the above execution subject can acquire the working status of each transport robot, and determine the transport robots in an idle state as a plurality of candidate transport robots for transporting containers. Then, the above execution subject can locate a position of each candidate transport robot respectively to acquire current positions of the plurality of candidate transport robots. Step 520: calculating, based on the current positions of the plurality of candidate transport robots and a center position of the seed aisle, path information corresponding to the plurality of candidate transport robots.

In the present step, the above execution subject, which acquires current positions of the plurality of candidate transport robots and calculates a current position of each candidate transport robot and a center position of the seed aisle, determines a distance between the current position of each candidate transport robot and the center position of the seed aisle to obtain path information corresponding to each candidate transport robot.

Step 530: selecting, based on the path information corresponding to the plurality of candidate transport robots, a target transport robot from the plurality of candidate transport robots.

In the present step, after acquiring the path information corresponding to the plurality of candidate transport robots, the above execution subject compares the path information corresponding to each candidate transport robot, determines a candidate transport robot with the smallest path information, and determines it as a target transport robot.

Step 540: sending the tasks to be transported corresponding to the target workstation and the seed aisle to the target transport robot, so that the target transport robot performs container transportation according to the tasks to be transported.

In the present step, after determining the target transport robot, the above execution subject can determine, according to the target workstation and the seed aisle, tasks to be transported corresponding to the target workstation and the seed aisle from the plurality of tasks to be transported, and send the tasks to be transported corresponding to the target workstation and the seed aisle to the target transport robot. After receiving the tasks to be transported corresponding to the target workstation and the seed aisle, the target transport robot can perform container transportation from the seed aisle according to the tasks to be transported, to transport the containers in the seed aisle to the target workstation.

As an optional implementation, the above step 540, i.e., sending the tasks to be transported corresponding to the target workstation and the seed aisle to the target transport robot, so that the target transport robot performs container transportation according to the tasks to be transported, may comprise the following steps:

A first step: screening, based on the tasks to be transported corresponding to the target workstation and a transport capacity corresponding to the target transport robot, a plurality of candidate containers in the seed aisle to obtain a plurality of primary screening containers.

Specifically, after acquiring the target transport robot, the above execution subject, which can acquire all containers in the seed aisle and screen, based on the tasks to be transported corresponding to the target workstation and a transport capacity corresponding to the target transport robot, a plurality of candidate containers in the seed aisle, can judge each candidate container in the seed aisle respectively, determine whether the workstation corresponding to the candidate containers is the target workstation, and determine whether the number of remaining transport containers of the target transport robot is greater than 0, i.e.: the number $\emptyset$ of containers that the target transport robot can transport at one time - the number of selected containers in the list $^\circ$C > 0, whether the number of idle buffer locations of the target workstation $\pi$ is greater than 0, and whether the number of idle queue positions at an unloading point corresponding to the target workstation is greater than 0.

The above execution subject screens a plurality of candidate containers in the seed aisle according to the above multiple screening conditions to obtain a plurality of primary screening containers.

A second step: performing, based on position information and task information corresponding to the plurality of primary screening containers, score calculation on the plurality of primary screening containers to obtain scores corresponding to the plurality of primary screening containers. Specifically, after acquiring the plurality of primary screening containers, the above execution subject can acquire position information and task information corresponding to each primary screening container, and perform, based on the position information and the task information corresponding to each primary screening container, score calculation on the plurality of primary screening containers to obtain scores corresponding to the plurality of primary screening containers.

The above execution subject can calculate an actual distance from the position information corresponding to the primary screening containers to the target workstation; a wave priority of the task information corresponding to the primary screening containers; whether picking points of the primary screening containers belong to the container picking points in the list of containers that have been selected by the target transport robot, so that a set of picking points for one transportation is minimized, thereby obtaining scores corresponding to the plurality of primary screening containers.

A third step: selecting, based on the scores corresponding to the plurality of primary screening containers, a first set of containers to be transported corresponding to the seed aisle.

Specifically, after acquiring the scores corresponding to the plurality of primary screening containers, the above execution subject makes a selection from the plurality of primary screening containers according to the scores corresponding to the plurality of primary screening containers until there are no primary screening containers meeting the screening conditions in the seed aisle, and selects a first set of containers to be transported corresponding to the seed aisle.

A fourth step: sending the first set of containers to be transported to the target transport robot, so that the target transport robot performs container transportation according to the first set of containers to be transported.

Specifically, after determining the first set of containers to be transported, the above execution subject can send the first set of containers to be transported to the target transport robot, so that the target transport robot performs container transportation according to the first set of containers to be transported, to transport the containers to be transported in the first set of containers to be transported to the target workstation.

After determining the first set of containers to be transported, the above execution subject can use a TSP algorithm to find an optimal sequence, with the current position of the target transport robot as a starting point, the target workstation as a destination point, and all the picking points of the containers to be transported in the first set of containers to be transported as necessary points, to generate transport tasks. The transport tasks can be expressed as: {picking point, container number, container coordinates, sequence}, {picking point, container number, container coordinates, sequence}, etc.

In the present implementation, by screening and scoring the containers in the seed aisle, the best containers to be transported are selected, and the priority of the transport tasks can be considered to ensure timeliness.

In the present embodiment, by screening out a target transport robot based on the current positions of the candidate transport robots and the center position of the seed aisle, the nearest transport robot can be selected.

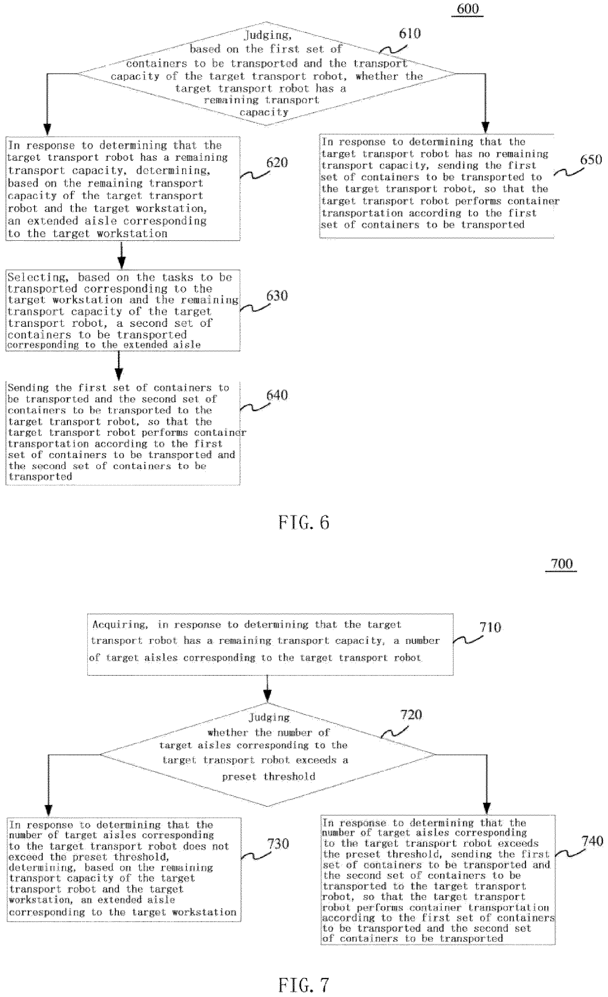

Refer to Fig. 6, which shows a flowchart 600 of an embodiment of sending a first set of containers to be transported to the target transport robot. That is, the above step 540, i.e., sending the tasks to be transported corresponding to the target workstation and the seed aisle to the target transport robot, so that the target transport robot performs container transportation according to the tasks to be transported, may comprise the following steps:

Step 610: judging, based on the first set of containers to be transported and the transport capacity of the target transport robot, whether the target transport robot has a remaining transport capacity.

In the present step, after determining the first set of containers to be transported in the seed aisle, the above execution subject can compare the number of containers in the first set of containers to be transported and the transport capacity of the target transport robot, to judge whether the target transport robot has a remaining transport capacity.

Step 620: in response to determining that the target transport robot has a remaining transport capacity, determining, based on the remaining transport capacity of the target transport robot and the target workstation, an extended aisle corresponding to the target workstation.

In the present step, the above execution subject, which determines, upon comparison, that the target transport robot has a remaining transport capacity to prove that the target transport robot is not fully loaded in the seed aisle, can determine, based on the remaining transport capacity of the target transport robot and the target workstation, an extended aisle corresponding to the target workstation from other candidate aisles. The extended aisle may be a candidate aisle that has the greatest correlation with the target workstation except the seed aisle.

As an optional implementation, the above step 620, i.e., in response to determining that the target transport robot has a remaining transport capacity, determining, based on the remaining transport capacity of the target transport robot and the target workstation, an extended aisle corresponding to the target workstation, may comprise the following steps:

A first step: in response to determining that the target transport robot has a remaining transport capacity, performing, based on the remaining transport capacity of the target transport robot and the target workstation, score calculation on other candidate aisles to obtain other candidate aisle scores corresponding to the target workstation.

Specifically, the above execution subject, which determines, upon judgment, that the target transport robot has a remaining transport capacity, can acquire the remaining transport capacity of the target transport robot, determine corresponding other candidate aisles according to the target workstation, and then acquire aisle information of the other candidate aisles. The above execution subject can perform, based on the remaining transport capacity of the target transport robot and the aisle information of the other candidate aisles, score calculation on the other candidate aisles to obtain other candidate aisle scores corresponding to the target workstation.

As an optional implementation, the first step above, i.e., in response to determining that the target transport robot has a remaining transport capacity, performing, based on the remaining transport capacity of the target transport robot and the target workstation, score calculation on other candidate aisles to obtain other candidate aisle scores corresponding to the target workstation, may comprise the following steps:

Step 1: acquiring, in response to determining that the target transport robot has a remaining transport capacity, a number of containers corresponding to the other candidate aisles and a number of buffer locations corresponding to the target workstation.

Specifically, the above execution subject, which determines, upon judgment, that the target transport robot has a remaining transport capacity, can perform container number statistics on each other candidate aisle respectively for each other candidate aisle, and screen out a number of containers in the other candidate aisles belonging to the target workstation. In addition, the above execution subject can acquire a number of buffer locations corresponding to the target workstation, so that the above execution subject acquires a number of containers in each other candidate aisle corresponding to the target workstation and a number of buffer locations corresponding to the target workstation.

Step 2: performing, based on the number of containers corresponding to the other candidate aisles and the number of buffer locations corresponding to the target workstation, container number information calculation on the other candidate aisles to obtain container scores corresponding to the other candidate aisles.

Specifically, after acquiring the number of containers corresponding to the other candidate aisles and the number of buffer locations corresponding to the target workstation, the above execution subject can perform, based on the number of containers and the number of buffer locations, container number information calculation on the other candidate aisles to obtain container scores corresponding to the other candidate aisles.

The above execution subject can calculate a container score corresponding to the other candidate aisles by the following formula:

$$D_j = \beta_1 * d_j$$

$$d_j = min(m,n)$$

where $D_j$ is a container score corresponding to the other candidate aisles j, $d_j$, which is a number of containers that can be transported in the other candidate aisles, is limited by the number of buffer locations of the target workstation and takes a minimum value of the number m of containers and the number n of buffer locations, and $\beta_1$ is a weight value preset by the staff based on experience. The larger $D_j$ is, the more containers to be transported are in the other candidate aisles.

Step 3: performing, based on the container scores and the remaining transport capacity of the target transport robot, vehicle full load information calculation on the other candidate aisles to obtain vehicle full load scores corresponding to the other candidate aisles.

Specifically, after acquiring the container scores of the other candidate aisles, the above execution subject can perform, based on the number of containers that can be transported in the other candidate aisles and the remaining transport capacity corresponding to the target transport robot, vehicle full load information calculation on the other candidate aisles to obtain vehicle full load scores corresponding to the other candidate aisles.

The above execution subject can calculate a vehicle full load score corresponding to the other candidate aisles by the following formula:

$$E_j = \beta_2 * e_j$$

$$\text{If } d_j \geq x, \ e_j = 1; \text{ if } d_j < x, \ e_j = 0;$$

where $E_j$ is a vehicle full load score of the other candidate aisle j, $d_j$ is a number of containers that can be transported in the other candidate aisle, x is a remaining transport capacity corresponding to the target transport robot, $e_j$ indicates whether

the transport robot can be fully loaded if this other candidate aisle is selected, and $\beta_2$ is a weight value preset by the staff based on experience.

Step 4: performing, based on a number of vehicles in the other candidate aisles, aisle vehicle number information calculation on the other candidate aisles to obtain vehicle scores corresponding to the other candidate aisles.

Specifically, the above execution subject can acquire a number of vehicles in the other candidate aisles, and determine a number of transport robots that already exist in the other candidate aisles. The above execution subject can perform, based on the number of vehicles in the other candidate aisles, aisle vehicle number information calculation on the other candidate aisles to obtain vehicle scores corresponding to the other candidate aisles.

The above execution subject can calculate a vehicle score corresponding to the other candidate aisles by the following formula:

$$F_j = \beta_3 {}^* f_j$$

where $F_j$ is a vehicle score of the other candidate aisles j, $f_j$ is a number of vehicles in the other candidate aisles, and $\beta_3$ is a weight value preset by the staff based on experience. The larger $F_j$ is, the more congested the other candidate aisles are, so it is necessary to find idle other candidate aisles as much as possible, to reduce congestion in the subsequently selected aisles during the transportation process, so as to improve the overall transportation efficiency.

Step 5: performing, based on center positions of the other candidate aisles, a position of the target workstation, a position of the target transport robot and a center position of the seed aisle, distance information calculation on the other candidate aisles to obtain distance scores corresponding to the other candidate aisles.

Specifically, the above execution subject can determine center positions of the other candidate aisles, further calculate a distance between the target workstation and the center positions of the other candidate aisles, a distance between the position of the target transport robot and the center positions of the other candidate aisles and a distance between the center position of the seed aisle and the center positions of the other candidate aisles, and then perform, based on the above three distances, distance information calculation on the other candidate aisles to obtain distance scores corresponding to the other candidate aisles.

The above execution subject can calculate a distance score corresponding to the other candidate aisles by the following formula:

$$G_j = \beta_4 {}^* (g_{j\pi} + g_{j\beta} + g_{j\alpha})$$

where $G_j$ is a distance score of the other candidate aisles j, $g_{j\pi}$ is a distance between the target workstation and the center positions of the other candidate aisles, $g_{j\alpha}$ is a distance between the position of the target transport robot and the center positions of the other candidate aisles, $g_{j\beta}$ is a distance between the center position of the seed aisle and the center positions of the other candidate aisles, and $\beta_4$ is a weight value preset by the staff based on experience. The larger $G_j$ is, the farther the total distance of the other candidate aisles is.

Step 6: calculating, based on the seed aisle corresponding to the target workstation, channel scores corresponding to the other candidate aisles.

Specifically, the above execution subject can determine, based on the seed aisle of the target workstation, a set °F of aisles corresponding to the target workstation, and compare the aisles in the set °F of aisles corresponding to the target workstation with each other candidate aisle to judge whether the other candidate aisles are in the set °F of aisles. The above execution subject can calculate channel scores corresponding to the other candidate aisles according to comparison results. The above execution subject can calculate a channel score corresponding to the other candidate aisles by the following formula:

$$H_j = \beta_4 {}^* h_j$$

where $H_j$ is channel score of the other candidate aisles j, $h_j$ indicates whether the other candidate aisles are in the set °F of aisles, wherein if the set °F of aisles contains channels of the other candidate aisles j, $h_j=1$, otherwise $h_j=0$, and $\beta_4$ is a weight value preset by the staff based on experience.

Step 7: acquiring other candidate aisle scores corresponding to the target workstation based on the container scores, vehicle full load scores, vehicle scores, distance scores and channel scores corresponding to the other candidate aisles.

Specifically, after acquiring the container scores, vehicle full load scores, vehicle scores, distance scores and channel scores corresponding to the other candidate aisles, the above execution subject can calculate other candidate aisle scores corresponding to the target workstation based on the container scores, vehicle full load scores, vehicle scores, distance scores and channel scores corresponding to the other candidate aisles.

The above execution subject can calculate another candidate aisle score corresponding to the target workstation by the following formula:

$$\text{cost}_j = D_j + E_j - F_j - G_j + H_j$$

where $cost_{ij}$ is another candidate aisle score of the target workstation for the other candidate aisles j. In the present implementation, by performing score calculation on the other candidate aisles respectively from multiple different dimensions, such as the number of containers, the vehicle full load information, the aisle vehicle number information, and whether the distance information channels are consistent, the other candidate aisle scores are enabled to display the other candidate aisles from different dimensions, thereby making the other candidate aisle scores more accurate.

A second step: determining, based on the other candidate aisle scores corresponding to the target workstation, an extended aisle corresponding to the target workstation.

Specifically, after acquiring the other candidate aisle scores corresponding to the target workstation, the above execution subject can compare each other candidate aisle score, select the other candidate aisle with the highest score from all the other candidate aisle scores, and determine it as an extended aisle corresponding to the target workstation.

In the present implementation, by further selecting an extended aisle for the target workstation based on the other candidate aisle scores, a new aisle can be further extended in the case where the containers in the seed aisle cannot make the target transport robot fully loaded, to enable the target transport robot to achieve full vehicle load.

Step 630: selecting, based on the tasks to be transported corresponding to the target workstation and the remaining transport capacity of the target transport robot, a second set of containers to be transported corresponding to the extended aisle.

In the present step, after determining the extended aisle corresponding to the target workstation, the above execution subject can select, based on the tasks to be transported corresponding to the target workstation, all containers corresponding to the tasks to be transported from the extended aisle, screen, based on the remaining transport capacity of the target transport robot, all the containers corresponding to the tasks to be transported, and select a second set of containers to be transported corresponding to the extended aisle.

Specifically, the above execution subject can determine the second set of containers to be transported by using the step of determining the first set of containers to be transported in step 540.

Step 640: sending the first set of containers to be transported and the second set of containers to be transported to the target transport robot, so that the target transport robot performs container transportation according to the first set of containers to be transported and the second set of containers to be transported.

In the present step, after determining the second set of containers to be transported corresponding to the extended aisle, the above execution subject can send the first set of containers to be transported and the second set of containers to be transported to the target transport robot, so that the target transport robot performs container transportation according to the first set of containers to be transported and the second set of containers to be transported, to transport the containers to be transported in the first set of containers to be transported and the second set of containers to be transported to the target workstation.

Specifically, the above execution subject can enable the target transport robot to transport the first set of containers to be transported and the second set of containers to be transported by using the step of sending the first set of containers to be transported to the target transport robot in step 540. Moreover, after sending the first set of containers to be transported and the second set of containers to be transported to the target transport robot, the above execution subject can judge again whether the target transport robot has a remaining transport capacity. If there is still a remaining transport capacity, the above execution subject can continue to execute steps 610 to 640 to further acquire an extended aisle and a second set of containers to be transported in the extended aisle until the target transport robot has no remaining transport capacity.

In the present embodiment, by further selecting an extended aisle for the target workstation based on the other candidate aisle scores, a new aisle can be further extended in the case where the containers in the seed aisle cannot make the target transport robot fully loaded, so that the target transport robot can transport the containers in the seed aisle and the extended aisle to achieve full vehicle load so as to improve the transportation efficiency.

With continuous reference to Fig. 6, the above step 540, i.e., sending the tasks to be transported corresponding to the target workstation and the seed aisle to the target transport robot, so that the target transport robot performs container transportation according to the tasks to be transported, may also comprise the following steps:

Step 650: in response to determining that the target transport robot has no remaining transport capacity, sending the first set of containers to be transported to the target transport robot, so that the target transport robot performs container transportation according to the first set of containers to be transported.

In the present step, the above execution subject, which determines, upon judgment, that the target transport robot has no remaining transport capacity, determines that the containers to be transported in the seed aisle can make the target transport robot fully loaded, and can send the first set of containers to be transported directly to the target transport robot, so that the target transport robot performs container transportation according to the first set of containers to be transported, to transport the containers to be transported in the first set of containers to be transported to the target workstation.

After determining the first set of containers to be transported, the above execution subject can use a TSP algorithm to find an optimal sequence, with the current position of the target transport robot as a starting point, the target workstation as a destination point, and all the picking points of the containers to be transported in the first set of containers to be transported as necessary points, to generate transport tasks. The transport tasks can be expressed as: {picking point, container number, container coordinates, sequence}, {picking point, container number, container coordinates, sequence}, etc.

In the present embodiment, the target transport robot can be fully loaded by determining the containers to be transported in the seed aisle, so that the target transport robot can complete the transportation in one seed aisle without crossing aisles, thereby improving the transportation efficiency.

Refer to Fig. 7, which shows a flowchart 700 of an embodiment of determining an extended aisle corresponding to the target workstation. That is, the above step 620, i.e., in response to determining that the target transport robot has a remaining transport capacity, determining, based on the remaining transport capacity of the target transport robot and the target workstation, an extended aisle corresponding to the target workstation, may comprise the following steps:

Step 710: acquiring, in response to determining that the target transport robot has a remaining transport capacity, a number of target aisles corresponding to the target transport robot.

In the present step, the above execution subject, which determines, upon judgment, that the target transport robot has a remaining transport capacity, determines that the target transport robot is not fully loaded, and can further acquire a set °F of aisles corresponding to the target transport robot. The set °F of aisles may include all aisles that need transportation corresponding to the target transport robot, and may include a seed aisle and at least one extended aisle. The above execution subject can determine, based on the set of aisles, a number of target aisles corresponding to the target transport robot, and the number of target aisles may include a total number of seed aisles and extended aisles in the set of aisles.

Step 720: judging whether the number of target aisles corresponding to the target transport robot exceeds a preset threshold.

In the present step, after acquiring the number of target aisles corresponding to the target transport robot, the above execution subject can compare the number of target aisles with a preset threshold, and judge whether the number of target aisles corresponding to the target transport robot exceeds the preset threshold. The preset threshold may be a value preset by the staff, which may be 3, 5 or the like, and is not specifically limited in the present disclosure.

Step 730: in response to determining that the number of target aisles corresponding to the target transport robot does not exceed the preset threshold, determining, based on the remaining transport capacity of the target transport robot and the target workstation, an extended aisle corresponding to the target workstation.

In the present step, the above execution subject, which determines, upon judgment, that the number of target aisles corresponding to the target transport robot does not exceed the preset threshold, can determine an extended aisle corresponding to the target workstation from the other candidate aisles based on the remaining transport capacity of the target transport robot and the target workstation. The extended aisle may be a candidate aisle that has the greatest correlation with the target workstation except the seed aisle.

In the present embodiment, by further judging the number of target aisles of the target transport robot in the case of determining that the target transport robot has a remaining transport capacity, and determining the extended aisle corresponding to the target workstation only in the case where the number of target aisles corresponding to the target transport robot does not exceed the preset threshold, the target transport robot can be prevented from performing transportation across multiple different aisles at one time, thereby avoiding a single vehicle crossing too many aisles and improving the transportation efficiency.

With continuous reference to Fig. 7, the above method further comprises:

Step 740: in response to determining that the number of target aisles corresponding to the target transport robot exceeds the preset threshold, sending the first set of containers to be transported and the second set of containers to be transported to the target transport robot, so that the target transport robot performs container transportation according to the first set of containers to be transported and the second set of containers to be transported.

In the present step, the above execution subject, which determines, upon judgment, that the number of target aisles corresponding to the target transport robot exceeds the preset threshold, will not perform the step of determining the extended aisle again, but directly sends the first set of containers to be transported corresponding to the seed aisle and the second set of containers to be transported corresponding to the extended aisle to the target transport robot, so that the target transport robot performs container transportation according to the first set of containers to be transported and the second set of containers to be transported, to transport the containers to be transported in the first set of containers to be transported and the second set of containers to be transported to the target workstation.

In the present embodiment, by further judging the number of target aisles of the target transport robot in the case of determining that the target transport robot has a remaining transport capacity, and not determining the extended aisle corresponding to the target workstation again in the case where the number of target aisles corresponding to the target transport robot exceeds the preset threshold, the target transport robot can be prevented from performing transportation across multiple different aisles at one time, thereby avoiding a single vehicle crossing too many aisles and improving the transportation efficiency.

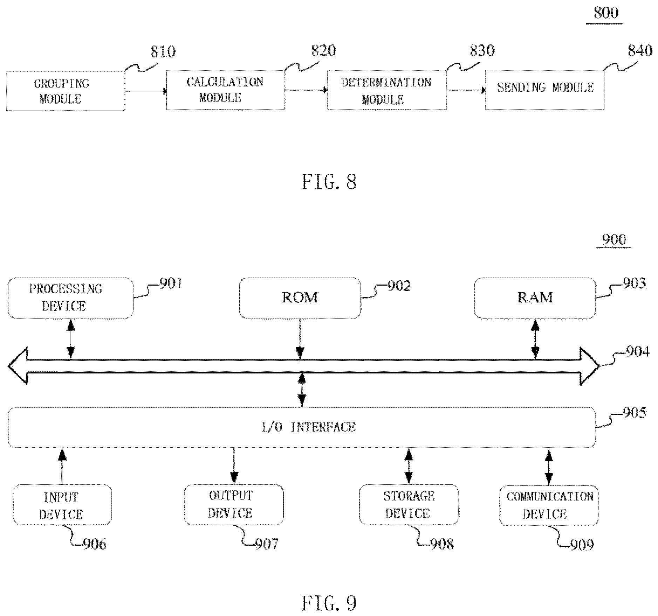

With reference to Fig. 8, as an implementation of the methods shown in the above figures, the present disclosure provides an embodiment of a container transporting apparatus. This apparatus embodiment corresponds to the method embodiment shown in Fig. 2.

As shown in Fig. 8, the container transporting apparatus 800 of the present embodiment may comprise: a grouping module 810, a calculation module 820, a determination module 830, and a sending module 840.

Among them, the grouping module 810 is configured to group, in response to acquiring a plurality of tasks to be transported, the plurality of tasks to be transported based on candidate aisles to obtain grouping results corresponding to the candidate aisles, wherein the grouping results include tasks to be transported corresponding to the candidate aisles and candidate workstations corresponding to the candidate aisles;

> the calculation module 820 is configured to perform, based on the grouping results, score calculation on the candidate aisles corresponding to the candidate workstations to obtain candidate aisle scores corresponding to the candidate workstations;
>
> the determination module 830 is configured to determine, based on the candidate aisle scores corresponding to the candidate workstations, a target workstation and a seed aisle corresponding to the target workstation from the candidate workstations and the candidate aisles corresponding to the candidate workstations; and
>
> the sending module 840 is configured to send the tasks to be transported corresponding to the target workstation and the seed aisle to a target transport robot, so that the target transport robot performs container transportation according to the tasks to be transported.

In some optional implementations of the present embodiment, the calculation module 820 is further configured to: acquire, based on the grouping results, candidate aisles and tasks to be transported corresponding to the candidate workstations; acquire, based on the tasks to be transported corresponding to the candidate workstations, a corresponding number of containers in the candidate aisles corresponding to the candidate workstations and a number of buffer locations corresponding to the candidate workstations; and perform, based on the number of containers and the number of buffer locations, score calculation on the candidate aisles corresponding to the candidate workstations to obtain candidate aisle scores corresponding to the candidate workstations.

In some optional implementations of the present embodiment, the calculation module 820 is further configured to: perform, based on the number of containers and the number of buffer locations, container number information calculation on the candidate aisles to obtain container scores corresponding to the candidate aisles; perform, based on the container scores and a transport capacity corresponding to the transport robot, vehicle full load information calculation on the candidate aisles to obtain vehicle full load scores corresponding to the candidate aisles; perform, based on a number of vehicles in the candidate aisles, aisle vehicle number information calculation on the candidate aisles to obtain vehicle scores corresponding to the candidate aisles; perform, based on center positions of the candidate aisles and positions of the candidate workstations, distance information calculation on the candidate aisles to obtain distance scores corresponding to the candidate aisles; and acquire candidate aisle scores corresponding to the candidate workstations based on the container scores, vehicle full load scores, vehicle scores and distance scores corresponding to the candidate aisles.

In some optional implementations of the present embodiment, the candidate workstations correspond to a plurality of candidate aisles; and the determination module 830 is further configured to: select, based on the candidate aisle scores corresponding to the candidate workstations, an optimal aisle corresponding to each candidate workstation from the plurality of candidate aisles corresponding to each candidate workstation; determine, based on the optimal aisle corresponding to each candidate workstation and buffer location idle information corresponding to each candidate workstation, buffer location utilization information corresponding to each candidate workstation; and select, based on the buffer location utilization information, a target workstation from a plurality of candidate workstations, and determine the optimal aisle corresponding to the target workstation as a seed aisle corresponding to the target workstation.

In some optional implementations of the present embodiment, the sending module 840 is further configured to: in response to determining a plurality of candidate transport robots for transporting containers, acquire current positions of the plurality of candidate transport robots; calculate, based on the current positions of the plurality of candidate transport robots and a center position of the seed aisle, path information corresponding to the plurality of candidate transport robots; select, based on the path information corresponding to the plurality of candidate transport robots, a target transport robot from the plurality of candidate transport robots; and send the tasks to be transported corresponding to the target workstation and the seed aisle to the target transport robot, so that the target transport robot performs container transportation according to the tasks to be transported.

In some optional implementations of the present embodiment, the sending module 840 is further configured to: screen, based on the tasks to be transported corresponding to the target workstation and a transport capacity corresponding to the target transport robot, a plurality of candidate containers in the seed aisle to obtain a plurality of primary screening containers; perform, based on position information and task information corresponding to the plurality of primary screening containers, score calculation on the plurality of primary screening containers to obtain scores corresponding to the plurality of primary screening containers; select, based on the scores corresponding to the plurality of primary screening containers, a first set of containers to be transported corresponding to the seed aisle; and send the first set of containers to be transported to the target transport robot, so that the target transport robot performs container transportation according to the first set of containers to be transported.

In some optional implementations of the present embodiment, the sending module 840 is further configured to: judge, based on the first set of containers to be transported and the transport capacity of the target transport robot, whether the target transport robot has a remaining transport capacity; in response to determining that the target transport robot has a remaining transport capacity, determine, based on the remaining transport capacity of the target transport robot and the target workstation, an extended aisle corresponding to the target workstation; select, based on the tasks to be transported corresponding to the target workstation and the remaining transport capacity of the target transport robot, a second set of containers to be transported corresponding to the extended aisle; and send the first set of containers to be transported and the second set of containers to be transported to the target transport robot, so that the target transport robot performs container transportation according to the first set of containers to be transported and the second set of containers to be transported.

In some optional implementations of the present embodiment, the sending module 840 is further configured to: in response to determining that the target transport robot has a remaining transport capacity, perform, based on the remaining transport capacity of the target transport robot and the target workstation, score calculation on other candidate aisles to obtain other candidate aisle scores corresponding to the target workstation; and determine, based on the other candidate aisle scores corresponding to the target workstation, an extended aisle corresponding to the target workstation.

In some optional implementations of the present embodiment, the sending module 840 is further configured to: acquire, in response to determining that the target transport robot has a remaining transport capacity, a number of containers corresponding to the other candidate aisles and a number of buffer locations corresponding to the target workstation; perform, based on the number of containers corresponding to the other candidate aisles and the number of buffer locations corresponding to the target workstation, container number information calculation on the other candidate aisles to obtain container scores corresponding to the other candidate aisles; perform, based on the container scores and the remaining transport capacity of the target transport robot, vehicle full load information calculation on the other candidate aisles to obtain vehicle full load scores corresponding to the other candidate aisles; perform, based on a number of vehicles in the other candidate aisles, aisle vehicle number information calculation on the other candidate aisles to obtain vehicle scores corresponding to the other candidate aisles; perform, based on center positions of the other candidate aisles, a position of the target workstation, a position of the target transport robot and a center position of the seed aisle, distance information calculation on the other candidate aisles to obtain distance scores corresponding to the other candidate aisles; calculate, based on the seed aisle corresponding to the target workstation, channel scores corresponding to the other candidate aisles; and acquire other candidate aisle scores corresponding to the target workstation based on the container scores, vehicle full load scores, vehicle scores, distance scores and channel scores corresponding to the other candidate aisles.

In some optional implementations of the present embodiment, the sending module 840 is further configured to: acquire, in response to determining that the target transport robot has a remaining transport capacity, a number of target aisles corresponding to the target transport robot; judge whether the number of target aisles corresponding to the target transport robot exceeds a preset threshold; and in response to determining that the number of target aisles corresponding to the target transport robot does not exceed the preset threshold, determine, based on the remaining transport capacity of the target transport robot and the target workstation, an extended aisle corresponding to the target workstation.

In some optional implementations of the present embodiment, the sending module 840 is further configured to: in response to determining that the number of target aisles corresponding to the target transport robot exceeds the preset threshold, send the first set of containers to be transported and the second set of containers to be transported to the target transport robot, so that the target transport robot performs container transportation according to the first set of containers to be transported and the second set of containers to be transported.

In the container transporting apparatus provided by the above embodiment of the present disclosure, the above execution subject first groups, in response to acquiring a plurality of tasks to be transported, the plurality of tasks to be transported based on candidate aisles to obtain grouping results corresponding to the candidate aisles, wherein the grouping results include tasks to be transported corresponding to the candidate aisles and candidate workstations corresponding to the candidate aisles, then performs, based on the grouping results, score calculation on the candidate aisles corresponding to the candidate workstations to obtain candidate aisle scores corresponding to the candidate workstations, then determines, based on the candidate aisle scores corresponding to the candidate workstations, a target workstation and a seed aisle corresponding to the target workstation from the candidate workstations and the candidate aisles corresponding to the candidate workstations, and finally, sends the tasks to be transported corresponding to the target workstation and the seed aisle to a target transport robot, so that the target transport robot performs container transportation according to the tasks to be transported. In the process of using the transport robot to transport containers in a aisle, the above execution subject can group the tasks to be transported based on the aisle as a dimension, determine a seed aisle corresponding to the target workstation and then use the target transport robot to transport the tasks to be transported corresponding to the target workstation and the seed aisle, can enable the target transport robot to complete container transportation in the seed aisle and reduce the number of cross-aisles, and can effectively prevent the target transport robot from constantly changing aisles in the transportation process, so that the transport robot can quickly pick up goods in a single aisle, thereby improving the overall transportation efficiency in the container transporting process, reducing the transportation time and improving the transportation efficiency.

Those skilled in the art can understand that the above apparatus also includes some other well-known structures, such as a processor, a memory, etc. In order to unnecessarily obscure the embodiments of the present disclosure, these well-known structures are not shown in Fig. 8.

It should be noted that, in the technical solution of the present disclosure, the gathering, collection, updating, analysis, processing, use, transmission, storage, etc. of user personal information involved all comply with the provisions of relevant laws and regulations, are used for legal purposes, and do not violate public order and good morals. Necessary measures are taken for the user personal information to prevent illegal access to user personal information data and maintain the user personal information security, network security and national security.

Reference is now made to Fig. 9, which shows a structural schematic diagram of an electronic device 900 suitable for implementing embodiments of the present disclosure. The terminal devices in the embodiments of the present disclosure may include but are not limited to mobile terminals such as smart screens, laptops, PADs (tablet computers), PMPs (portable multimedia players) and vehicle-mounted terminals (such as vehicle-mounted navigation terminals), and fixed terminals such as digital TVs, and desktop computers. The terminal device shown in Fig. 9, which is merely an example, should not bring any limitations to the functions and use scopes of the embodiments of the present disclosure.

As shown in Fig. 9, the electronic device 900 may include a processing device (e.g., a central processing unit, a graphics processor, etc.) 901, which can perform various appropriate actions and processes according to a program stored in a read-only memory (ROM) 902 or a program loaded from a storage device 908 into a random access memory (RAM) 903. Various programs and data required for the operation of the electronic device 900 are also stored in the RAM 903. The processing device 901, the ROM 902, and the RAM 903 are connected to one another via a bus 904. An input/output (I/O) interface 905 is also connected to the bus 904.

In general, the following devices can be connected to the I/O interface 905: an input device 906 including, for example, a touch screen, a touchpad, a keyboard, a mouse, a camera, a microphone, an accelerometer and a gyroscope; an output device 907 including, for example, a liquid crystal display (LCD), a speaker and a vibrator; a storage device 908 including, for example, a magnetic tape and a hard disk; and a communication device 909. The communication device 909 can allow the electronic device 900 to communicate with other devices wirelessly or by wire to exchange data. Although Fig. 9 shows an electronic device 900 having various devices, it should be understood that it is not required to implement or possess all of the devices shown. More or fewer devices may be implemented or provided alternatively. Each block shown in Fig. 9 may represent one device, or may represent multiple devices as required.

In particular, according to the embodiment of the present disclosure, the process described above with reference to the flowchart may be implemented as a computer software program. For example, the embodiment of the present disclosure includes a computer program product, which comprises a computer program carried on a computer-readable medium, wherein the computer program contains a program code for executing the method shown in the flowchart. In such an embodiment, the computer program may be downloaded and installed from a network via the communication device 909, or installed from the storage device 908, or installed from the ROM 902. When the computer program is executed by the processing device 901, the above functions defined in the method of the embodiment of the present disclosure are performed. It should be noted that the computer-readable medium of the embodiment of the present disclosure may be a computer-readable signal medium or a computer-readable storage medium or any combination of the two. The computer-readable storage medium may be, for example, but not limited to, an electrical, magnetic, optical, electromagnetic, infrared, or semiconductor system, apparatus or device, or any combination of the foregoing. More specific examples of the computer-readable storage medium may include, but are not limited to, an electrical connection having one or more conductors, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing. In the embodiment of the present disclosure, the computer-readable storage medium may be any tangible medium that contains or stores a program, which can be used by or in conjunction with an instruction execution system, apparatus or device. Moreover, in the embodiment of the present disclosure, the computer-readable signal medium may include a data signal propagated in a baseband or as part of a carrier wave, in which a computer-readable program code is carried. Such a propagated data signal may take a variety of forms, including but not limited to an electromagnetic signal, an optical signal, or any suitable combination of the foregoing. The computer-readable signal medium, which may also be any computer-readable medium other than the computer-readable storage medium, can send, propagate or transport a program for use by or in conjunction with an instruction execution system, apparatus or device. The program code contained on the computer-readable medium may be transmitted by any appropriate medium, including but not limited to: a wire, an optical cable, an RF (radio frequency) and the like, or any suitable combination of the foregoing.

The computer program code for performing the operations of the embodiments of the present disclosure may be written in one or more programming languages or a combination thereof, including object-oriented programming languages such as Java, Smalltalk and C++ as well as conventional procedural programming languages such as "C" language or similar programming languages. The program code may be executed entirely on a user computer, partly on a user computer, as a stand-alone software package, partly on a user computer and partly on a remote computer, or entirely on a remote computer or server. Where a remote computer is involved, the remote computer can be connected to a user computer via any type of network including a Local Area Network (LAN) or a Wide Area Network (WAN), or can be connected to an external computer (e.g., through the Internet using an Internet service provider).

The flowcharts and block diagrams in the figures illustrate possible system architectures, functions and operations of the system, method and computer program product according to various embodiments of the present disclosure. In this regard, each block in the flowcharts or block diagrams can represent a module, a program segment or a part of a code, which contains one or more executable instructions for implementing the specified logic functions. It should also be noted that, in some alternative implementations, the functions marked in the blocks may also occur out of the order marked in the figures. For example, two blocks shown in succession can actually be executed substantially in parallel, and they can sometimes be executed in a reverse order, depending on the functions involved. It should further be noted that each block in the block diagrams and/or flowcharts, and the combination of blocks in the block diagrams and/or flowcharts can be implemented by a dedicated hardware-based system that performs the specified functions or operations, or can be implemented by a combination of dedicated hardware and computer instructions.

The units involved in the embodiments described in the present disclosure can be implemented by software or hardware. The described units can also be provided in a processor, which, for example, can be described as: a processor including a grouping module, a calculation module, a determination module, and a sending module, wherein the names of these modules do not constitute limitations to the modules themselves under certain circumstances.

As another aspect, the present disclosure also provides a computer-readable medium, which may be included in the above electronic device, or may exist alone without being assembled into the electronic device. The above computer-readable medium carries one or more programs that, when executed by the electronic device, cause the electronic device to: in response to acquiring a plurality of tasks to be transported, group the plurality of tasks to be transported based on candidate aisles to obtain grouping results corresponding to the candidate aisles, wherein the grouping results include tasks to be transported corresponding to the candidate aisles and candidate workstations corresponding to the candidate aisles; perform, based on the grouping results, score calculation on the candidate aisles corresponding to the candidate workstations to obtain candidate aisle scores corresponding to the candidate workstations; determine, based on the candidate aisle scores corresponding to the candidate workstations, a target workstation and a seed aisle corresponding to the target workstation from the candidate workstations and the candidate aisles corresponding to the candidate workstations; and send the tasks to be transported corresponding to the target workstation and the seed aisle to a target transport robot, so that the target transport robot performs container transportation according to the tasks to be transported.

The above description is merely an illustration of the preferred embodiments of the present disclosure and the technical principles used. Those skilled in the art should understand that the scope of the invention involved in the embodiments of the present disclosure is not limited to the technical solutions formed by specific combinations of the above technical features, but should also cover other technical solutions formed by any combinations of the above technical features or their equivalent features without departing from the above inventive concept, for example, technical solutions formed by mutual replacement of the above features with (but not limited to) technical features having similar functions as disclosed in the embodiments of the present disclosure.

**Claims**

1. A container transporting method, the method comprising:

   in response to acquiring a plurality of tasks to be transported, grouping the plurality of tasks to be transported based on candidate aisles to obtain grouping results corresponding to the candidate aisles, wherein the grouping results include tasks to be transported corresponding to the candidate aisles and candidate workstations corresponding to the candidate aisles;

performing, based on the grouping results, score calculation on the candidate aisles corresponding to the candidate workstations to obtain candidate aisle scores corresponding to the candidate workstations;

determining, based on the candidate aisle scores corresponding to the candidate workstations, a target workstation and a seed aisle corresponding to the target workstation from the candidate workstations and the candidate aisles corresponding to the candidate workstations; and

sending the tasks to be transported corresponding to the target workstation and the seed aisle to a target transport robot, so that the target transport robot performs container transportation according to the tasks to be transported.

2. The method according to claim 1, wherein performing, based on the grouping results, score calculation on the candidate aisles corresponding to the candidate workstations to obtain candidate aisle scores corresponding to the candidate workstations comprises:

acquiring, based on the grouping results, candidate aisles and tasks to be transported corresponding to the candidate workstations;

acquiring, based on the tasks to be transported corresponding to the candidate workstations, a corresponding number of containers in the candidate aisles corresponding to the candidate workstations and a number of buffer locations corresponding to the candidate workstations; and

performing, based on the number of containers and the number of buffer locations, score calculation on the candidate aisles corresponding to the candidate workstations to obtain candidate aisle scores corresponding to the candidate workstations.

3. The method according to claim 2, wherein performing, based on the number of containers and the number of buffer locations, score calculation on the candidate aisles corresponding to the candidate workstations to obtain candidate aisle scores corresponding to the candidate workstations comprises:

performing, based on the number of containers and the number of buffer locations, container number information calculation on the candidate aisles to obtain container scores corresponding to the candidate aisles;

performing, based on the container scores and a transport capacity corresponding to the transport robot, vehicle full load information calculation on the candidate aisles to obtain vehicle full load scores corresponding to the candidate aisles;

performing, based on a number of vehicles in the candidate aisles, aisle vehicle number information calculation on the candidate aisles to obtain vehicle scores corresponding to the candidate aisles;

performing, based on center positions of the candidate aisles and positions of the candidate workstations, distance information calculation on the candidate aisles to obtain distance scores corresponding to the candidate aisles; and

acquiring candidate aisle scores corresponding to the candidate workstations based on the container scores, vehicle full load scores, vehicle scores and distance scores corresponding to the candidate aisles.

4. The method according to claim 1, wherein the candidate workstations correspond to a plurality of candidate aisles; and determining, based on the candidate aisle scores corresponding to the candidate workstations, a target workstation and a seed aisle corresponding to the target workstation from the candidate workstations and the candidate aisles corresponding to the candidate workstations comprises:

selecting, based on the candidate aisle scores corresponding to the candidate workstations, an optimal aisle corresponding to each candidate workstation from the plurality of candidate aisles corresponding to each candidate workstation;

determining, based on the optimal aisle corresponding to each candidate workstation and buffer location idle information corresponding to each candidate workstation, buffer location utilization information corresponding to each candidate workstation; and

selecting, based on the buffer location utilization information, a target workstation from a plurality of candidate workstations, and determining the optimal aisle corresponding to the target workstation as a seed aisle corresponding to the target workstation.

5. The method according to claim 1, wherein sending the tasks to be transported corresponding to the target workstation and the seed aisle to a target transport robot, so that the target transport robot performs container transportation according to the tasks to be transported, comprises:

in response to determining a plurality of candidate transport robots for transporting containers,
acquiring current positions of the plurality of candidate transport robots;
calculating, based on the current positions of the plurality of candidate transport robots and a center position of the seed aisle, path information corresponding to the plurality of candidate transport robots;
selecting, based on the path information corresponding to the plurality of candidate transport robots, a target transport robot from the plurality of candidate transport robots; and
sending the tasks to be transported corresponding to the target workstation and the seed aisle to the target transport robot, so that the target transport robot performs container transportation according to the tasks to be transported.

6. The method according to any one of claim 1 or 5, wherein sending the tasks to be transported corresponding to the target workstation and the seed aisle to the target transport robot, so that the target transport robot performs container transportation according to the tasks to be transported, comprises:

screening, based on the tasks to be transported corresponding to the target workstation and a transport capacity corresponding to the target transport robot, a plurality of candidate containers in the seed aisle to obtain a plurality of primary screening containers;
performing, based on position information and task information corresponding to the plurality of primary screening containers, score calculation on the plurality of primary screening containers to obtain scores corresponding to the plurality of primary screening containers;
selecting, based on the scores corresponding to the plurality of primary screening containers, a first set of containers to be transported corresponding to the seed aisle; and
sending the first set of containers to be transported to the target transport robot, so that the target transport robot performs container transportation according to the first set of containers to be transported.

7. The method according to claim 6, wherein sending the first set of containers to be transported to the target transport robot, so that the target transport robot performs container transportation according to the first set of containers to be transported, comprises:

judging, based on the first set of containers to be transported and the transport capacity of the target transport robot, whether the target transport robot has a remaining transport capacity;
in response to determining that the target transport robot has a remaining transport capacity, determining, based on the remaining transport capacity of the target transport robot and the target workstation, an extended aisle corresponding to the target workstation;
selecting, based on the tasks to be transported corresponding to the target workstation and the remaining transport capacity of the target transport robot, a second set of containers to be transported corresponding to the extended aisle; and
sending the first set of containers to be transported and the second set of containers to be transported to the target transport robot, so that the target transport robot performs container transportation according to the first set of containers to be transported and the second set of containers to be transported.

8. The method according to claim 7, wherein in response to determining that the target transport robot has a remaining transport capacity, determining, based on the remaining transport capacity of the target transport robot and the target workstation, an extended aisle corresponding to the target workstation comprises:

in response to determining that the target transport robot has a remaining transport capacity, performing, based on the remaining transport capacity of the target transport robot and the target workstation, score calculation on other candidate aisles to obtain other candidate aisle scores corresponding to the target workstation; and
determining, based on the other candidate aisle scores corresponding to the target workstation, an extended aisle corresponding to the target workstation.

9. The method according to claim 8, wherein in response to determining that the target transport robot has a remaining transport capacity, performing, based on the remaining transport capacity of the target transport robot and the target workstation, score calculation on other candidate aisles to obtain other candidate aisle scores corresponding to the target workstation comprises:

acquiring, in response to determining that the target transport robot has a remaining transport capacity, a number of containers corresponding to the other candidate aisles and a number of buffer locations corresponding to the target workstation;

performing, based on the number of containers corresponding to the other candidate aisles and the number of buffer locations corresponding to the target workstation, container number information calculation on the other candidate aisles to obtain container scores corresponding to the other candidate aisles;

performing, based on the container scores and the remaining transport capacity of the target transport robot, vehicle full load information calculation on the other candidate aisles to obtain vehicle full load scores corresponding to the other candidate aisles;

performing, based on a number of vehicles in the other candidate aisles, aisle vehicle number information calculation on the other candidate aisles to obtain vehicle scores corresponding to the other candidate aisles;

performing, based on center positions of the other candidate aisles, a position of the target workstation, a position of the target transport robot and a center position of the seed aisle, distance information calculation on the other candidate aisles to obtain distance scores corresponding to the other candidate aisles;

calculating, based on the seed aisle corresponding to the target workstation, channel scores corresponding to the other candidate aisles; and

acquiring other candidate aisle scores corresponding to the target workstation based on the container scores, vehicle full load scores, vehicle scores, distance scores and channel scores corresponding to the other candidate aisles.

10. The method according to claim 7, wherein in response to determining that the target transport robot has a remaining transport capacity, determining, based on the remaining transport capacity of the target transport robot and the target workstation, an extended aisle corresponding to the target workstation comprises:

acquiring, in response to determining that the target transport robot has a remaining transport capacity, a number of target aisles corresponding to the target transport robot;

judging whether the number of target aisles corresponding to the target transport robot exceeds a preset threshold; and

in response to determining that the number of target aisles corresponding to the target transport robot does not exceed the preset threshold, determining, based on the remaining transport capacity of the target transport robot and the target workstation, an extended aisle corresponding to the target workstation.

11. The method according to claim 10, wherein sending the first set of containers to be transported and the second set of containers to be transported to the target transport robot, so that the target transport robot performs container transportation according to the first set of containers to be transported and the second set of containers to be transported, comprises:

in response to determining that the number of target aisles corresponding to the target transport robot exceeds the preset threshold, sending the first set of containers to be transported and the second set of containers to be transported to the target transport robot, so that the target transport robot performs container transportation according to the first set of containers to be transported and the second set of containers to be transported.

12. A container transporting apparatus, the apparatus comprising:

a grouping module configured to group, in response to acquiring a plurality of tasks to be transported, the plurality of tasks to be transported based on candidate aisles to obtain grouping results corresponding to the candidate aisles, wherein the grouping results include tasks to be transported corresponding to the candidate aisles and candidate workstations corresponding to the candidate aisles;

a calculation module configured to perform, based on the grouping results, score calculation on the candidate aisles corresponding to the candidate workstations to obtain candidate aisle scores corresponding to the candidate workstations;

a determination module configured to determine, based on the candidate aisle scores corresponding to the candidate workstations, a target workstation and a seed aisle corresponding to the target workstation from the candidate workstations and the candidate aisles corresponding to the candidate workstations; and

a sending module configured to send the tasks to be transported corresponding to the target workstation and the seed aisle to a target transport robot, so that the target transport robot performs container transportation according to the tasks to be transported.

13. An electronic device, comprising:

one or more processors; and

a storage device for storing one or more programs that, when executed by the one or more processors, cause the one or more processors to implement the method according to any one of claims 1 to 11.

14. A computer-readable medium having a computer program stored thereon, **characterized in that** the computer program, when executed by a processor, implements the method according to any one of claims 1 to 11.

100

FIG. 1

200

| In response to acquiring a plurality of tasks to be transported, grouping the plurality of tasks to be transported based on candidate aisles to obtain grouping results corresponding to the candidate aisles | 210 |

| Performing, based on the grouping results, score calculation on the candidate aisles corresponding to the candidate workstations to obtain candidate aisle scores corresponding to the candidate workstations | 220 |

| Determining, based on the candidate aisle scores corresponding to the candidate workstations, a target workstation and a seed aisle corresponding to the target workstation from the candidate workstations and the candidate aisles corresponding to the candidate workstations | 230 |

| Sending the tasks to be transported corresponding to the target workstation and the seed aisle to a target transport robot, so that the target transport robot performs container transportation according to the tasks to be transported | 240 |

FIG. 2

301

Grouping the plurality of tasks to be transported based on candidate aisles

Performing score calculation on the candidate aisles corresponding to the candidate workstations

Determining a target workstation and a seed aisle corresponding to the target workstation

Sending the tasks to be transported corresponding to the target workstation and the seed aisle to a target transport robot

FIG. 3

400

| Acquiring, based on the grouping results, candidate aisles and tasks to be transported corresponding to the candidate workstations | 410 |

↓

| Acquiring, based on the tasks to be transported corresponding to the candidate workstations, a corresponding number of containers in the candidate aisles corresponding to the candidate workstations and a number of buffer locations corresponding to the candidate workstations | 420 |

↓

| Performing, based on the number of containers and the number of buffer locations, score calculation on the candidate aisles corresponding to the candidate workstations to obtain candidate aisle scores corresponding to the candidate workstations | 430 |

FIG. 4

500

| In response to determining a plurality of candidate transport robots for transporting containers, acquiring current positions of the plurality of candidate transport robots | 510 |

↓

| Calculating, based on the current positions of the plurality of candidate transport robots and a center position of the seed aisle, path information corresponding to the plurality of candidate transport robots | 520 |

↓

| Selecting, based on the path information corresponding to the plurality of candidate transport robots, a target transport robot from the plurality of candidate transport robots | 530 |

↓

| Sending the tasks to be transported corresponding to the target workstation and the seed aisle to the target transport robot, so that the target transport robot performs container transportation according to the tasks to be transported | 540 |

FIG. 5

600

Judging, based on the first set of containers to be transported and the transport capacity of the target transport robot, whether the target transport robot has a remaining transport capacity — 610

In response to determining that the target transport robot has a remaining transport capacity, determining, based on the remaining transport capacity of the target transport robot and the target workstation, an extended aisle corresponding to the target workstation — 620

In response to determining that the target transport robot has no remaining transport capacity, sending the first set of containers to be transported to the target transport robot, so that the target transport robot performs container transportation according to the first set of containers to be transported — 650

Selecting, based on the tasks to be transported corresponding to the target workstation and the remaining transport capacity of the target transport robot, a second set of containers to be transported corresponding to the extended aisle — 630

Sending the first set of containers to be transported and the second set of containers to be transported to the target transport robot, so that the target transport robot performs container transportation according to the first set of containers to be transported and the second set of containers to be transported — 640

FIG. 6

700

Acquiring, in response to determining that the target transport robot has a remaining transport capacity, a number of target aisles corresponding to the target transport robot — 710

Judging whether the number of target aisles corresponding to the target transport robot exceeds a preset threshold — 720

In response to determining that the number of target aisles corresponding to the target transport robot does not exceed the preset threshold, determining, based on the remaining transport capacity of the target transport robot and the target workstation, an extended aisle corresponding to the target workstation — 730

In response to determining that the number of target aisles corresponding to the target transport robot exceeds the preset threshold, sending the first set of containers to be transported and the second set of containers to be transported to the target transport robot, so that the target transport robot performs container transportation according to the first set of containers to be transported and the second set of containers to be transported — 740

FIG. 7

29

<u>800</u>

810   820   830   840

| GROUPING MODULE | → | CALCULATION MODULE | → | DETERMINATION MODULE | → | SENDING MODULE |

FIG. 8

<u>900</u>

| PROCESSING DEVICE | 901 | ROM | 902 | RAM | 903 |

904

905  I/O INTERFACE

| INPUT DEVICE | OUTPUT DEVICE | STORAGE DEVICE | COMMUNICATION DEVICE |

906   907   908   909

FIG. 9

# INTERNATIONAL SEARCH REPORT

International application No.

**PCT/CN2024/079866**

## A. CLASSIFICATION OF SUBJECT MATTER

G06Q10/083(2024.01)i

According to International Patent Classification (IPC) or to both national classification and IPC

## B. FIELDS SEARCHED

Minimum documentation searched (classification system followed by classification symbols)

IPC:G06Q10

Documentation searched other than minimum documentation to the extent that such documents are included in the fields searched

Electronic data base consulted during the international search (name of data base and, where practicable, search terms used)

CNTXT, CNABS, VEN, CNKI: 容器, 搬运, 分组, 巷道, 工作站, 目标, 计算, 优选, 分数, vessel, container, carry, handling, group+, course, road, roadway, workstation, object, target, calculate, optimize, fraction

## C. DOCUMENTS CONSIDERED TO BE RELEVANT

| Category* | Citation of document, with indication, where appropriate, of the relevant passages | Relevant to claim No. |
|---|---|---|
| A | CN 115657611 A (BEIJING JINGDONG QIANSHI TECHNOLOGY CO., LTD.) 31 January 2023 (2023-01-31) description, paragraphs 0004-0077 | 1-14 |
| A | CN 113673887 A (SHENZHEN KUBAO SOFTWARE CO., LTD.) 19 November 2021 (2021-11-19) description, paragraphs 0005-0115 | 1-14 |
| A | CN 114444989 A (SHANGHAI QUICKTRON INTELLIGENT TECHNOLOGY CO., LTD.) 06 May 2022 (2022-05-06) description, paragraphs 0004-0075 | 1-14 |
| A | CN 114620389 A (BEIJING JINGDONG ZHENSHI INFORMATION TECHNOLOGY CO., LTD.) 14 June 2022 (2022-06-14) entire document | 1-14 |
| A | CN 114803243 A (BEIJING JINGDONG QIANSHI TECHNOLOGY CO., LTD.) 29 July 2022 (2022-07-29) entire document | 1-14 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **08 May 2024** | **17 May 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/079866**

**C.    DOCUMENTS CONSIDERED TO BE RELEVANT**

| Category* | Citation of document, with indication, where appropriate, of the relevant passages | Relevant to claim No. |
|---|---|---|
| A | WO 2023020213 A1 (SHENZHEN KUBO SOFTWARE CO., LTD.) 23 February 2023 (2023-02-23) <br> entire document | 1-14 |

Form PCT/ISA/210 (second sheet) (July 2022)

**INTERNATIONAL SEARCH REPORT**
Information on patent family members

International application No.

**PCT/CN2024/079866**

| Patent document cited in search report | | | Publication date (day/month/year) | Patent family member(s) | | | Publication date (day/month/year) |
|---|---|---|---|---|---|---|---|
| CN | 115657611 | A | 31 January 2023 | None | | | |
| CN | 113673887 | A | 19 November 2021 | None | | | |
| CN | 114444989 | A | 06 May 2022 | None | | | |
| CN | 114620389 | A | 14 June 2022 | None | | | |
| CN | 114803243 | A | 29 July 2022 | None | | | |
| WO | 2023020213 | A1 | 23 February 2023 | CN | 115907051 | A | 04 April 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310246396